(19) **Europäisches Patentamt / European Patent Office / Office européen des brevets**

(11) **EP 4 723 721 A1**

(12) # EUROPEAN PATENT APPLICATION
published in accordance with Art. 153(4) EPC

(43) Date of publication:
**08.04.2026  Bulletin 2026/15**

(21) Application number: **24840086.3**

(22) Date of filing: **10.07.2024**

(51) International Patent Classification (IPC):
$H04W\ 24/08^{(2009.01)}$    $H04W\ 72/044^{(2023.01)}$
$H04W\ 72/25^{(2023.01)}$    $H04W\ 72/02^{(2009.01)}$
$H04B\ 17/318^{(2015.01)}$    $H04B\ 7/06^{(2006.01)}$
$H04L\ 5/00^{(2006.01)}$    $H04W\ 92/18^{(2009.01)}$

(52) Cooperative Patent Classification (CPC):
**H04B 7/06; H04B 17/318; H04L 5/00; H04W 24/08;
H04W 72/02; H04W 72/044; H04W 72/25;
H04W 92/18**

(86) International application number:
**PCT/KR2024/009856**

(87) International publication number:
**WO 2025/014276 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.07.2023  KR 20230089399
10.08.2023  KR 20230105040**

(71) Applicant: **LG Electronics Inc.
Yeongdeungpo-gu
Seoul 07336 (KR)**

(72) Inventors:
• **PARK, Hanjun**
  **Seoul 06772 (KR)**
• **LEE, Seungmin**
  **Seoul 06772 (KR)**
• **HWANG, Daesung**
  **Seoul 06772 (KR)**

(74) Representative: **Maikowski & Ninnemann
Patentanwälte Partnerschaft mbB
Postfach 15 09 20
10671 Berlin (DE)**

(54) **METHOD AND APPARATUS FOR MEASURING BEAM FOR DEVICE-TO-DEVICE COMMUNICATION**

(57)  Proposed is an operation method for a first device (100) in a wireless communication system. The method may comprise the steps of: receiving a first inter-device physical channel transmission from a second device (200) on the basis of a first resource; and acquiring, on the basis of information on the first resource, information on a second resource for receiving a first reference signal for beam measurement.

## FIG. 13

receiving, from a second device,
a first inter-device physical channel transmission,
based on a first resource — S1310

obtaining information for a second resource
for receiving a first reference signal
for a beam measurement,
based on information for a first resource — S1320

Description

## TECHNICAL FIELD

This disclosure relates to a wireless communication system.

## BACKGROUND ART

5G NR is the next generation technology of long term evolution (LTE) and is a new clean-slate form mobile communication system with high performance, low latency, and high availability. 5G NR may utilize all available spectrum resources, from the low frequency bands below 1 GHz to the mid-frequency bands from 1 GHz to 10 GHz and the high frequency (millimeter wave) bands above 24 GHz.

The 6G (wireless communication) system is aimed at (i) very high data rates per device, (ii) a very large number of connected devices, (iii) global connectivity, (iv) very low latency, (v) lowering energy consumption for battery-free internet of things (IoT) devices, (vi) ultra-reliable connectivity, and (vii) connected intelligence with machine learning capabilities. The vision of the 6G system may be in four aspects: intelligent connectivity, deep connectivity, holographic connectivity, and ubiquitous connectivity, and the 6G system may satisfy the requirements as shown in Table 1 below. For example, Table 1 may represent an example of the requirements of a 6G system.

[Table 1]

| Per device peak data rate | 1 Tbps |
|---|---|
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

## DISCLOSURE

## TECHNICAL SOLUTION

According to an embodiment of the present disclosure, a method for performing, by a first device, wireless communication may be proposed. For example, the method may comprise: receiving, from a second device, a first inter-device physical channel transmission, based on a first resource; and obtaining information for a second resource for receiving a first reference signal for a beam measurement, based on information for the first resource.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: receiving, from a second device, a first inter-device physical channel transmission, based on a first resource; and obtaining information for a second resource for receiving a first reference signal for a beam measurement, based on information for the first resource.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: receiving, from a second UE, a first inter-UE physical channel transmission, based on a first resource; and obtaining information for a second resource for receiving a first reference signal for a beam measurement, based on information for the first resource.

According to an embodiment of the present disclosure, a non-transitory computer-readable storage medium storing instructions may be proposed. For example, the instructions, based on being executed, may cause a first device to: receive, from a second device, a first inter-device physical channel transmission, based on a first resource; and obtain information for a second resource for receiving a first reference signal for a beam measurement, based on information for the first resource.

According to an embodiment of the present disclosure, a method for performing, by a second device, wireless communication may be proposed. For example, the method may comprise: transmitting, to a first device, a first inter-device physical channel transmission, based on a first resource; obtaining information for a second resource for transmitting a first reference signal for a beam measurement, based on information for the first resource; and transmitting, to the first device, the first reference signal, based on the second resource.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: transmitting, to a first device, a first inter-device physical channel transmission, based on a first resource; obtaining information for a second resource for transmitting a first reference signal for a beam measurement, based on information for the first resource; and transmitting, to the first device, the first reference signal, based on the second resource.

## BRIEF DESCRIPTION OF THE DRAWINGS

FIG. 1 shows a communication structure that can be provided in a 6G system, according to one embodiment of the present disclosure.

FIG. 2 shows an electromagnetic spectrum, according to one embodiment of the present disclosure.

FIG. 3 shows an example of an NTN typical scenario based on a transparent payload, according to one embodiment of the present disclosure.

FIG. 4 shows an example of an NTN typical scenario based on a regenerative payload, according to one embodiment of the present disclosure.

FIG. 5 shows an example of a sensing operation, according to one embodiment of the present disclosure.

FIG. 6 shows a structure of a slot of a frame, based on an embodiment of the present disclosure.

FIG. 7 shows an example of a BWP, based on an embodiment of the present disclosure.

FIG. 8 shows a procedure of performing V2X or SL communication by a UE based on a resource allocation mode, based on an embodiment of the present disclosure.

FIG. 9 shows a beam measurement resource determined based on sensing, according to an embodiment of the present disclosure.

FIG. 10 shows a beam measurement resource determined based on a control signal, according to an embodiment of the present disclosure.

FIG. 11 shows a beam measurement resource transmitted in a time-division multiplexing manner, according to an embodiment of the present disclosure.

FIG. 12 shows a beam measurement resource in which a beam sweeping operation is performed according to an embodiment of the present disclosure.

FIG. 13 shows a procedure for a first device to perform wireless communication, according to one embodiment of the present disclosure.

FIG. 14 shows a procedure for a second device to perform wireless communication, according to one embodiment of the present disclosure.

FIG. 15 shows a communication system 1, based on an embodiment of the present disclosure.

FIG. 16 shows wireless devices, based on an embodiment of the present disclosure.

FIG. 17 shows a signal process circuit for a transmission signal, based on an embodiment of the present disclosure.

FIG. 18 shows another example of a wireless device, based on an embodiment of the present disclosure.

FIG. 19 shows a hand-held device, based on an embodiment of the present disclosure.

FIG. 20 shows a vehicle or an autonomous vehicle, based on an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

In this specification, being "configured or defined" may be interpreted as being configured or pre-configured to a device via predefined signaling (e.g., SIB, MAC, RRC) from a base station or network. In this specification, being "configured or defined" may be interpreted as being pre-configured to a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

The technologies proposed in this specification may be implemented in 6G wireless technologies and may be applied to various 6G systems. For example, 6G systems may include key factors such as enhanced mobile broadband (eMBB), ultra-reliable low latency communications (URLLC), massive machine-type communication (mMTC), artificial intelligence (AI) integrated communication, tactile internet, and high throughput, high network capacity, high energy efficiency, low backhaul and access network congestion, and enhanced data security.

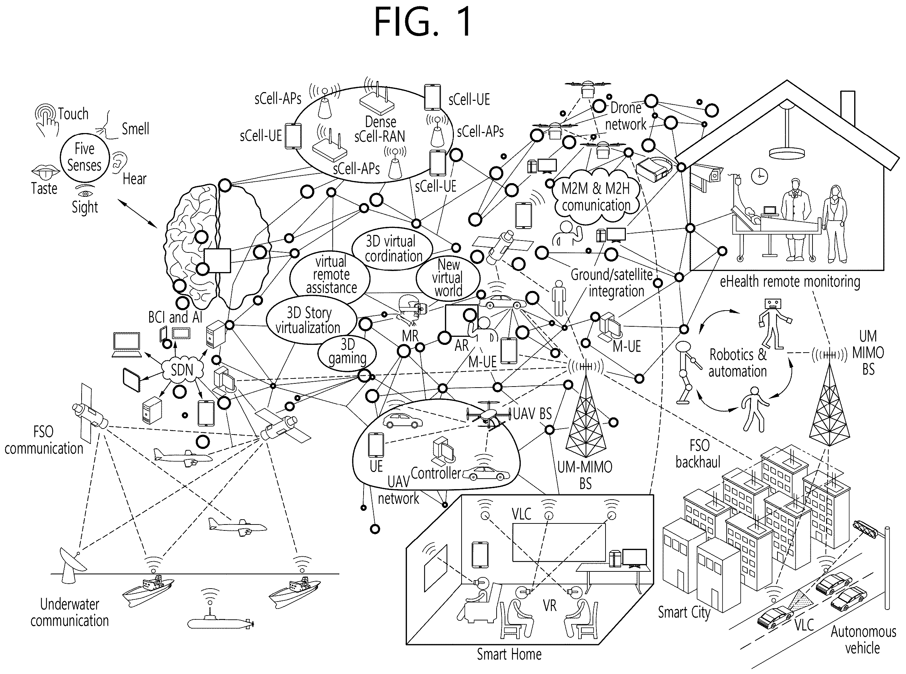

FIG. 1 shows a communication structure that can be provided in a 6G system, according to one embodiment of the present disclosure. The embodiment of FIG. 1 may be combined with various embodiments of the present disclosure.

In 6G, new network features may include the follows.

- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer
- Ubiquitous super 3D connectivity: Super 3D connection will be generated from 6G ubiquity to access networks and core network functions on drones and very low Earth orbit satellites.

Given the above new network characteristics of 6G, some common requirements may be as follows

- Small cell networks
- Ultra-dense heterogeneous network
- High-capacity backhaul
- Radar technology integrated with mobile technology: High-precision localization (or location-based services) through communication is one of the features of 6G wireless communication systems. Therefore, radar systems will be integrated with 6G networks.
- Softwarization and virtualization

The following describes the core implementation technologies for 6G systems.

- Artificial intelligence: Introducing AI into telecommunications may simplify and improve real-time data transmission. AI may use numerous analytics to determine the way complex target tasks are performed, which means AI may increase efficiency and reduce processing delays. Time-consuming tasks such as handover, network selection, and resource scheduling may be performed instantly by using AI. AI may also play an important role in machine-to-machine, machine-to-human, and human-to-machine communication. AI may also be a rapid communication in brain computer interface (BCI). AI-based communication systems may be supported by metamaterials, intelligent structures, intelligent networks, intelligent devices, intelligent cognitive radios, self-sustaining wireless networks, and machine learning.

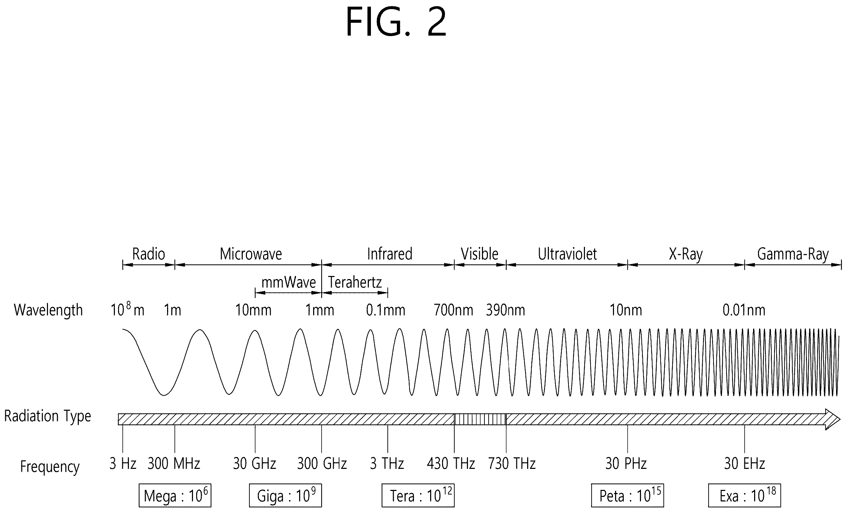

- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.

- Large-scale MIMO
- HBF, Hologram Bmeaforming
- Optical wireless technology
- FSO Backhaul Network
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.

- Advanced air mobility, AAM: AAM is the higher-level concept of urban air mobility (UAM), which refers to air transportation in urban centers, and may include travel between urban centers and regional hubs.

- Autonomous driving, self-driving: Vehicle to everything (V2X), a key element in building an autonomous driving infrastructure, may be a technology that allows cars to communicate and share with various elements on the road to drive autonomously, such as vehicle to vehicle (V2V) and vehicle to infrastructure (V2I). To maximize the performance of autonomous driving and ensure high safety, fast transmission speeds and low latency technologies are essential. In addition, in the future, autonomous driving may need to go beyond delivering warnings and intervene actively in vehicle operations and take control of the vehicle in dangerous situations. To do so, the amount of information that needs to be transmitted and received may be enormous, and in 6G, faster transmission speeds and lower latency than 5G are expected to maximize autonomous driving.

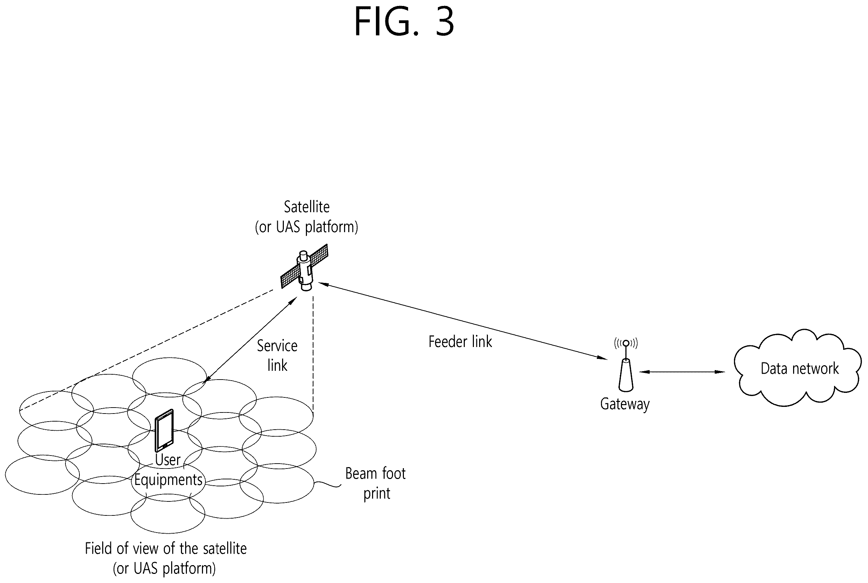

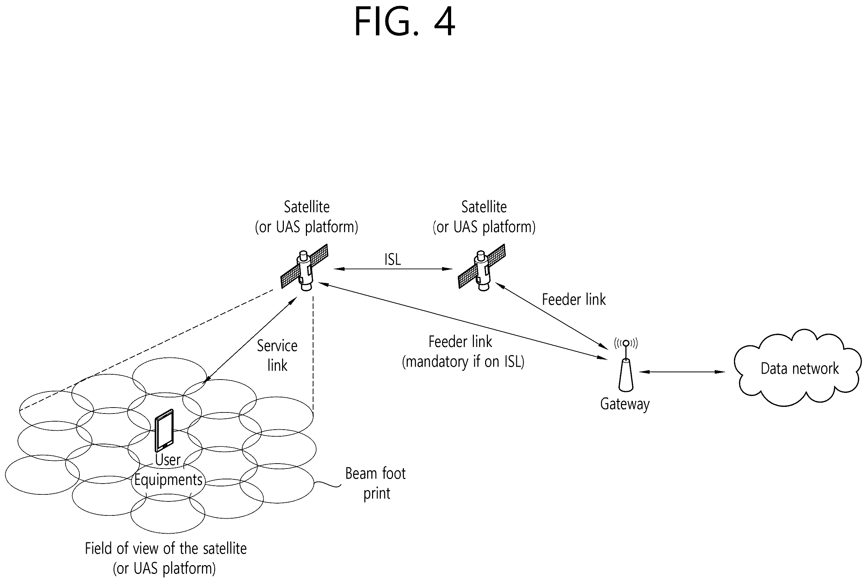

- Non-terrestrial networks, NTN: An NTN may represent a network or network segment that uses radio frequency (RF) resources aboard a satellite (or unmanned aerial system (UAS) platform). FIG. 3 shows an example of an NTN typical scenario based on a transparent payload, according to one embodiment of the present disclosure. FIG. 4 shows an example of an NTN typical scenario based on a regenerative payload, according to one embodiment of the present disclosure. The embodiments of FIG. 3 or FIG. 4 may be combined with various embodiments of the present disclosure. Referring to FIG. 3, a satellite (or UAS platform) may establish a service link with a UE. The satellite (or UAS platform) may be connected to a gateway via a feeder link. The satellite may be connected to the data network via a gateway. A beam footprint may refer to an area where signals transmitted by a satellite can be received. Referring to FIG. 4, a satellite (or UAS platform) may establish a service link with a UE. A satellite (or UAS platform) connected to a UE may be connected to other satellites (or UAS platforms) via inter-satellite links (ISLs). The other satellites (or UAS platforms) may be connected to a gateway via feeder links. Based on the regenerative payload, the satellite may be connected to the data network via other satellites and a gateway. If an ISL does not exist between the satellite and another satellite, a feeder link between the satellite and a gateway may be required. FIG. 3 and FIG. 4 are just examples of NTN scenarios, and NTN may be implemented based on scenarios in many different ways. For example, a satellite (or UAS platform) may implement a transparent or regenerative (with on board processing) payload. For example, the satellite (or UAS platform) may generate multiple beams over a service area designated based on the field of view of the satellite (or UAS platform). For example, the field of view of the satellite (or UAS platform) may vary depending on the on-board antenna diagram and the minimum elevation angle. For example, a transparent payload may include radio frequency filtering, frequency conversion, and amplification. Thus, the waveform signal repeated by the payload may not be changed. For example, a regenerative payload may include radio frequency filtering, frequency conversion and amplification, demodulation/decoding, switching and/or routing, and coding/modulation. For example, a regenerative payload may be substantially equivalent to carrying all or part of a base station's functionality on board a satellite (or UAS platform).

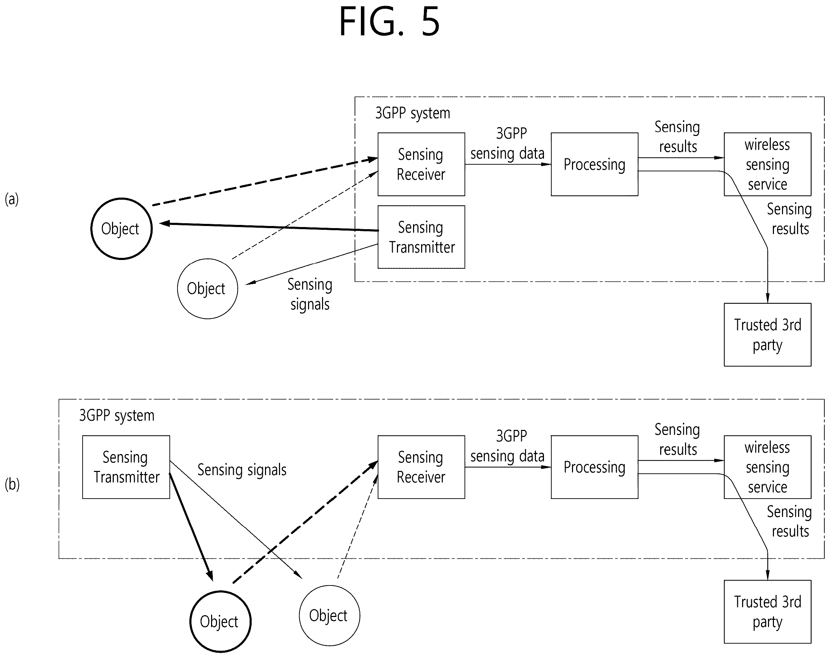

- Integrated sensing and communication, ISAC: Wireless sensing is a technology that uses radio frequencies to determine an object's instantaneous linear velocity, angle, distance (range), etc. to obtain information about an environment and/or the properties of an object in the environment. Since radio frequency sensing function does not require connecting to an object through a device in the network, it may provide a service for object positioning without a device. The ability to obtain range, velocity, and angle information from radio frequency signals can provide a wide range of new capabilities, such as detection of various objects, object recognition (e.g., vehicles, humans, animals, UAVs), and high-precision positioning, tracking, and activity recognition. Wireless sensing services may provide information to a variety of industries (e.g., unmanned aerial vehicles, smart homes, V2X, factories, railroads, public safety, etc.) enabling applications that provide, for example, intruder detection, assisted vehicle steering and navigation, trajectory tracking, conflict avoidance, traffic management, health and transportation management, and more. In some cases, wireless sensing may utilize non-3GPP type sensors (e.g., radar, cameras) to further support 3GPP-based sensing. For example, the operation of a wireless sensing service, i.e., the sensing operation, may rely on handling the transmission, reflection, and scattering of wireless sensing signals. Thus, wireless sensing may provide an opportunity to enhance existing communication systems from telecommunication networks to wireless communication and sensing networks. FIG. 5 shows an example of a sensing operation, according to one embodiment of the present disclosure. The embodiment of FIG. 5 may be combined with various embodiments of the present disclosure. Specifically, (a) of FIG. 5 shows an example of sensing using a sensing receiver and a sensing transmitter that are co-located (e.g., monostatic sensing), and (b) of FIG. 5 shows an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

A physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

In the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot ($N^{slot}_{symb}$), the number of slots per frame ($N^{frame,u}_{slot}$), and the number of slots per subframe ($N^{subframe,u}_{slot}$), according to an SCS configuration (u), when Normal CP or Extended CP is used.

[Table 2]

| CP Type | SCS ($15*2^u$) | $N^{slot}_{symb}$ | $N^{frame,u}_{slot}$ | $N^{subframe,u}_{slot}$ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |

(continued)

| CP Type | SCS (15*2$^u$) | $N^{slot}_{symb}$ | $N^{frame,u}_{slot}$ | $N^{subframe,u}_{slot}$ |
|---|---|---|---|---|
| Extended CP | 60kHz (u=2) | 12 | 40 | 4 |

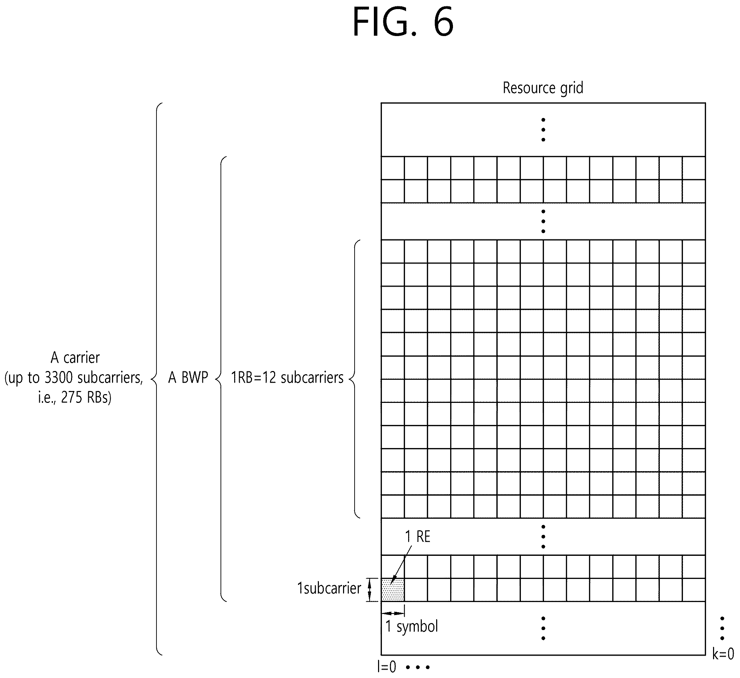

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain.

A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier

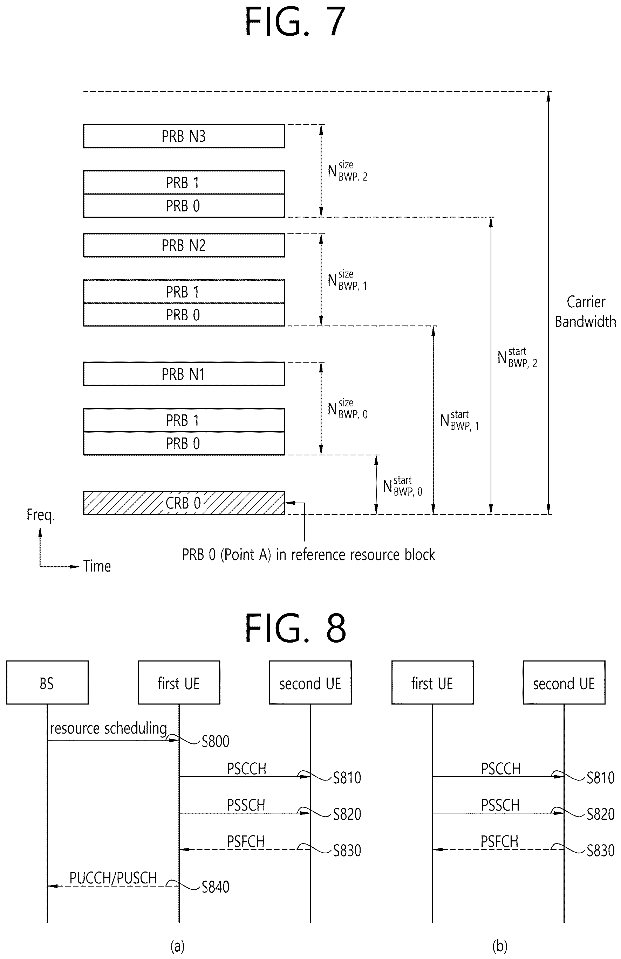

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In this specification, a PSCCH may be replaced by a control channel, a physical control channel, a control channel related to a sidelink, a physical control channel related to a sidelink, etc. In this specification, a PSSCH may be replaced by a shared channel, a physical shared channel, a shared channel related to a sidelink, a physical shared channel related to a sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be DCI for scheduling of SL.

Referring to (b) of FIG. 8, in resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Hereinafter, a UE procedure for determining a subset of resources to be reported to an higher layer in inter-UE physical shared channel (e.g., PSSCH) resource selection in sidelink resource allocation mode 2 will be described.

In resource allocation mode 2, the higher layer can request the UE to determine a subset of resources from which the higher layer will select resources for inter-UE physical channel (e.g., PSSCH/PSCCH) transmission. To trigger this procedure, in slot n, the higher layer provides the following parameters for this inter-UE physical channel (e.g., PSSCH/PSCCH) transmission:

- the resource pool from which the resources are to be reported;
- L1 priority, $prio_{TX}$;
- the remaining packet delay budget;
- the number of sub-channels to be used for the inter-UE physical channel (e.g., PSSCH/PSCCH) transmission in a slot, $L_{subCH}$;
- optionally, the resource reservation interval, $P_{rsvp\_TX}$, in units of msec.
- if the higher layer requests the UE to determine a subset of resources from which the higher layer will select resources for inter-UE physical channel (e.g., PSSCH/PSCCH) transmission as part of re-evaluation or pre-emption procedure, the higher layer provides a set of resources $(r_0, r_1, r_2, ...)$ which may be subject to re-evaluation and a set of resources $(r'_0, r'_1, r'_2, ...)$ which may be subject to pre-emption.

- it is up to UE implementation to determine the subset of resources as requested by higher layers before or after the slot $r''_i - T_3$, where $r''_i$ is the slot with the smallest slot index among $(r_0, r_1, r_2, ...)$ and $(r'_0, r'_1, r'_2, ...)$, and $T_3$ is equal to $T^{SL}_{proc,1}$, where $T^{SL}_{proc,1}$ is defined in slots, and where $\mu_{SL}$ is the SCS configuration of the SL BWP.

The following higher layer parameters affect this procedure:
sl-SelectionWindowList: internal parameter $T_{2min}$ is set to the corresponding value from higher layer parameter sl-SelectionWindowList for the given value of $prio_{TX}$.

- s1-Thres-RSRP-List: this higher layer parameter provides an RSRP threshold for each combination $(p_i, p_j)$, where $p_i$ is the value of the priority field in a received SCI format 1-A and $p_j$ is the priority of the transmission of the UE selecting resources; for a given invocation of this procedure, $p_j = prio_{TX}$.

- sl-RS-ForSensing selects if the UE uses the inter-UE physical shared channel (e.g., PSSCH)-RSRP or inter-UE physical control channel (e.g., PSCCH)-RSRP measurement.
- sl-ResourceReservePeriodList
- sl-SensingWindow: internal parameter $T_0$ is defined as the number of slots corresponding to sl-SensingWindow msec.
- sl-TxPercentageList: internal parameter $X$ for a given $prio_{TX}$ is defined as sl-TxPercentageList ($prio_{TX}$) converted from percentage to ratio.
- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp\_TX}$, if provided, is converted from units of msec to units of logical slots, resulting in $P'_{rsvp\_TX}$ .

Notation:

$(t'^{SL}_0, t'^{SL}_1, t'^{SL}_2, ...)$ may denote the set of slots which belongs to the sidelink resource pool.

For example, a UE may select a set of candidate resources (Sa) based on a procedure described below. For example, when resource (re)selection is triggered, a UE may select a candidate resource set (Sa) based on a procedure described below. For example, when re-evaluation or pre-emption is triggered, a UE may select a candidate resource set (Sa) based on a procedure described below.

The procedure below may be used.

1) A candidate single slot resource for transmission $R_{x,y}$ is defined as a set of $L_{subCH}$ contiguous subchannels with subc hannel x+j in slot t'^SL_y where j=0, ..., $L_{subCH}$. The UE shall assume that any set of $L_{subCH}$ contiguous subchannels included in t he corresponding resource pool within the time interval [n + $T_1$, n + $T_2$] correspond to one candidate singleslot resource.

selection of $T_1$ is up to UE implementation under $0 \leq T \leq$ T^SL_proc,1, where T^SL_proc,1 may be predefined. if $T_{2min}$ is shorter than the remaining packet delay budget (in slots) then $T_2$ is up to UE implementation subje ct to $T_{2min} \leq T_2 \leq$ remaining packet delay budget (in slots); otherwise $T_2$ is set to the remaining packet delay budget (i n slots).

The total number of candidate single-slot resources may be denoted by $M_{total}$.

2) The sensing window is defined by the range of slots [n-$T_0$, n-T^SL_proc,0) where $T_0$ may be predefined above and T^SL_proc,0 may be predefined. The UE shall monitor slots which belongs to a sidelink resource pool within the sensing window except for those in which its own transmissions occur. The UE shall perform the behaviour in the following steps based on inter-UE physical control channel (e.g., PSCCH) decoded and RSRP measured in these slots.

3) The internal parameter Th($p_i$, $p_j$) may be set to the corresponding value of RSRP threshold indicated by the i-th field in sl-Thres-RSRP-List, where i = $p_i$ + ($p_j$ - 1) * 8.

4) The set $S_A$ may be initialized to the set of all the candidate single-slot resources.

5) The UE shall exclude any candidate single-slot resource $R_{x,y}$ from the set $S_A$ if it meets all the following conditions:

the UE has not monitored slot t'^SL_m in Step 2.
for any periodicity value allowed by the higher layer parameter sl-ResourceReservePeriodList and a hypothetical SCI format 1-A received in slot t'^SL _m with 'Resource reservation period' field set to that periodicity value and indicating all subchannels of the resource pool in this slot, condition c in step 6 would be met.
5a) If the number of candidate single-slot resources $R_{x,y}$ remaining in the set $S_A$ may be smaller than X*$M_{total}$, the set $S_A$ may be initialized to the set of all the candidate single-slot resources as in step 4.

6) The UE shall exclude any candidate single-slot resource $R_{x,y}$ from the set $S_A$ if it meets all the following conditions:

a) the UE receives an SCI format 1-A in slot t'^SL_m, and 'Resource reservation period' field, if present, and 'Priority' field in the received SCI format 1-A indicate the values $P_{rsvp\_RX}$ and $prio_{RX}$, respectively;
b) the RSRP measurement performed for the received SCI format 1-A, is higher than Th($prio_{RX}$, $prio_{TX}$);
c) the SCI format received in slot t'^SL _m or the same SCI format which, if and only if the 'Resource reservation period' field is present in the received SCI format 1-A, may be assumed to be received in slot(s) t'^SL_m+q*P'$_{rsvp\_RX}$ determines the set of resource blocks and slots which overlaps with R$_{x, y+j*(P'\_rsvp\_TX)}$) for q=1, 2, ..., Q and j=0, 1, ..., C$_{resel}$-1. Here, P'$_{rsvp\_RX}$ may be P$_{rsvp\_RX}$ converted to units of logical slots, Q may be an up rounded value of T$_{scal}$/R$_{rsvp\_RX}$ if P$_{rsvp\_RX}$ < T$_{scal}$ and n'-m ≤ P'$_{rsvp\_RX}$, where t'^SL_n'=n if slot n belongs to the set (t'^SL_0, t'^SL_1, ..., t'^SL_T'$_{max}$-1), otherwise slot t'^SL_n' may be the f irst slot after slot n belonging to the set (t'^SL_0, t'^SL_1, ..., t'^SL_T'$_{max}$-1); otherwise Q=1. T$_{scal}$ may be set to select ion window size T$_2$ converted to units of msec.

7) If the number of candidate single-slot resources remaining in the set S$_A$ is smaller than X · M$_{total}$, then Th(p$_i$, p$_j$) may be increased by 3 dB for each priority value Th(p$_i$, p$_j$) and the procedure continues with step 4.

The UE shall report set S$_A$ to higher layers.

If a resource r$_i$ from the set (r$_0$,r$_1$,r$_2$, ...) is not a member of S$_A$, then the UE shall report re-evaluation of the resource r$_i$ to higher layers.

If a resource r$'_i$ from the set (r$'_0$, r$'_1$, r$'_2$, ...) meets the conditions below then the UE shall report pre-emption of the resource r$'_i$ to higher layers

- r$'_i$ is not a member of S$_A$, and

- r$'_i$ meets the conditions for exclusion in step 6, with Th(prio$_{RX}$, prio$_{TX}$) set to the final threshold after executin g steps 1)-7), i.e. including all necessary increments for reaching X · M$_{total}$, and

- the associated priority prio$_{RX}$, satisfies one of the following conditions:

-- sl-PreemptionEnable may be provided and may be equal to 'enabled' and prio$_{TX}$ > prio$_{RX}$

-- sl-PreemptionEnable may be provided and may be not equal to 'enabled', and prio$_{RX}$ < prio$_{pre}$ and pri o$_{TX}$ > prio$_{RX}$.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

The following describes a UE procedure to report HARQ-ACK on a sidelink.

A UE may be instructed by SCI format that schedules a reception of PSSCH on one or more subchannels from N$^{PSSCH}_{subch}$ to transmit a PSFCH that includes HARQ-ACK information in response to the reception of a PSSCH. A UE provides HARQ-ACK information including ACK or NACK, or NACK only.

A UE may be provided with the number of slots in a resource pool for PSFCH transmission occasion resources by sl-PSFCH-Period-r16. If the number is zero, PSFCH transmission from a UE is disabled in the resource pool. A UE expects to have a PSFCH transmission occasion resource in slot t'$_k$$^{SL}$ (0≤k < T'$_{max}$) if k mod N$^{PSFCH}_{PSSCH}$ = 0, where t'$_k$$^{SL}$ is a slot in the resource pool, and T'$_{max}$ is the number of slots in the resource pool within 10240 msec, and N$^{PSFCH}_{PSSCH}$ is provided in sl-PSFCH-Period-r16. A UE may be instructed by the upper layer not to transmit a PSFCH in response to the reception of a PSSCH. If a UE receives a PSSCH in the resource pool and the HARQ feedback enabled/disabled indicator field included in the associated SCI format 2-A or SCI format 2-B has a value of 1, the UE provides HARQ-ACK information via PSFCH transmission from in resource pool. A UE transmits the PSFCH in a first slot, wherein the first slot is the slot including a PSFCH resource and after the minimum number of slots provided by sl-MinTimeGapPSFCH-r16 of the resource pool after the last slot of the PSSCH reception.

A UE is provided by sl-PSFCH-RB-Set-r16 with M$^{PSFCH}_{PRB,set}$ of PRBs in a resource pool for PSFCH transmissions on PRBs in the resource pool. For the number of PSSCH slots related to a PSFCH slot that is less than or equal to N$_{subch}$ and N$^{PSFCH}_{PSSCH}$, the number of subchannels for the resource pool provided by sl-NumSubchannel, a UE allocates the PRB [(i+j-N$^{PSFCH}_{PSSCH}$)-M$^{PSFCH}_{subch,slot}$, (i+1+j-N$^{PSFCH}_{PSSCH}$)-M$^{PSFCH}_{subch,slot}$-1] among the M$_{PRB, set}$$^{PSFCH}$ PRB for slot i and subchannel j among the PSSCH slots associated with the PSFCH slot. Here, M$^{PSFCH}_{subch,slot}$ = M$^{PSFCH}_{PRB,set}$ / (N$_{subch}$-N$^{PSFCH}_{PSSCH}$), 0 ≤ i ≤ N$^{PSFCH}_{PSSCH}$, 0 ≤ j < N$_{subch}$, and the allocations starts in ascending order for i and continues in ascending order for j. A UE expects $M^{PSECH}_{PRB,set}$ to be a multiple of $N_{subch} \cdot N^{PSFCH}_{PSSCH}$.

A UE determines the number of available PSFCH resources for multiplexing HARQ-ACK information included in a PSFCH transmission as $R^{PSFCH}_{PRB,CS} = N^{PSFCH}_{type} \cdot M^{PSFCH}_{subch,slot} \cdot N^{PSFCH}_{CS}$. Here, $N^{PSFCH}_{CS}$ may be the number of cyclic shift pairs for the resource pool, and based on an indication by the higher layer,

- $N^{PSFCH}_{type} = 1$, and $M^{PSFCH}_{subch,slot}$ PRB may be related to the starting subchannel of the corresponding PSSCH,
- $N^{PSFCH}_{type} = N^{PSSCH}_{subch}$ and $N^{PSSCH}_{sbch} \cdot M^{PSFCH}_{subch,slot}$ PRB is related to one or more subchannels among $N^{PSSCH}_{subch}$ subchannels of the corresponding PSSCH.

A PSFCH resource is indexed first in ascending order of a PRB indexes among $N^{PSFCH}_{type} \cdot M^{PSFCH}_{subch,slot}$ PRBs, after then, it is indexed in ascending order of cyclic shift pair indexes among $N^{PSFCH}_{CS}$ cyclic shift pairs.

A UE determines an index of a PSFCH resource for a PSFCH transmission in response to the PSSCH reception as $(P_{ID} + M_{ID})$ mod $R^{PSFCH}_{PRB,CS}$. Here, $P_{ID}$ is a physical layer source ID provided by SCI format 2-A or 2-B scheduling a PSSCH reception, $M_{ID}$ is an ID of a UE receiving a PSSCH, indicated from the higher layer when a UE detects SCI format 2-A in which a cast type indicator field value is "01", $M_{ID}$ is 0 otherwise.

A UE determines $m_0$ value for calculating a cyclic shift $\alpha$ value from $N^{PSFCH}_{CS}$ and a cyclic shift pair index which corresponds to a PSFCH resource index using Table 3.

[Table 3]

| $N^{PSFCH}_{CS}$ | $m_0$ | | | | | |
|---|---|---|---|---|---|---|
| | Cyclic shift pair index 0 | Cyclic shift pair index 1 | Cyclic shift pair index 2 | Cyclic shift pair index 3 | Cyclic shift pair index 4 | Cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

As shown in Table 4, when a UE detects SCI format 2-A with a cast type indicator field value of "01" or "10", or as shown in Table 5, when a UE detects SCI format 2-B or SCI format 2-A with a cast type indicator field value of "11", a UE determines $m_{cs}$ the value for calculating a cyclic shift $\alpha$ value. A UE applies one cyclic shift among cyclic shifts to a sequence used in a PSFCH transmission.

[Table 4]

| HARQ-ACK Value | 0 (NACK) | 1 (ACK) |
|---|---|---|
| Sequence cyclic shift | 0 | 6 |

[Table 5]

| HARQ-ACK Value | 0 (NACK) | 1 (ACK) |
|---|---|---|
| Sequence cyclic shift | 0 | N/A |

For example, in the present disclosure, transmitting a resource or performing resource transmission may mean an operation of performing transmission based on the corresponding resource, an operation of performing transmission on the corresponding resource, or an operation of performing transmission using the corresponding resource.

Meanwhile, in inter-UE communication (e.g., sidelink (SL) communication), a UE may perform transmission and/or reception based on multiple panels and/or beam directions, and in this case, there may be a need to define a method for managing configuration of beam-related information or a spatial domain transmission and/or reception filter (hereinafter referred to as a beam management method).

Herein, a beam management method for the inter-UE communication (e.g., SL communication) may include a beam pairing method, which is a procedure of finding an inter-UE transmission beam and reception beam pair. For example, when a first UE and a second UE perform inter-UE communication (e.g., SL communication), the first UE may transmit a resource for beam measurement, and the second UE may measure reception sensitivity for all or a part of combinations of a transmission beam and a reception beam, and then report preferred transmission beam and/or reception beam information to the first UE. The first UE may perform communication to the second UE using the reported transmission beam.

Hereinafter, although the proposed schemes of the present disclosure are described with respect to inter-UE communication (e.g., SL communication), the proposed schemes of the present disclosure may be obviously extended and applied to communication between arbitrary nodes.

Proposal #01

According to an embodiment of the present disclosure, when a first UE and a second UE perform communication with each other, first potential transmission resource information to which first transmission beam information is applied is agreed and/or configured in advance, the first UE selectively transmits a first control signal and/or a first beam measurement resource to which the first transmission beam information is applied on the first potential transmission resource, and the second UE may perform beam measurement using the first control signal and/or the first beam measurement resource.

Herein, for example, the first transmission beam information may indicate mutually different beam information for the first control signal and/or the first beam measurement resource. For example, the first transmission beam information may respectively indicate transmission beam(s) for the first control signal and transmission beam(s) for the first beam measurement resource.

Herein, for example, when the first control signal and/or the first beam measurement resource is transmitted within a pre-agreed and/or pre-configured resource pool, information such as a transmission period and an offset of the first control signal and/or the first beam measurement resource may be interpreted and applied with reference to logical slot indexing defined on the pre-configured resource pool.

According to an embodiment of the present disclosure, when a first UE and a second UE perform inter-UE communication (e.g., SL communication) with each other, in order to select a transmission beam and/or reception beam pair, a procedure of measuring and comparing reception sensitivity for each combination of a transmission beam and a reception beam may need to be performed in advance.

In order to measure reception sensitivity for a combination of a transmission beam and a reception beam, a receiving UE needs to know a position of a resource on which a measurement resource corresponding to a specific transmission beam and/or a transmission beam identifier is transmitted, so as to measure reception sensitivity for the specific transmission beam and/or the transmission beam identifier. For example, when the receiving UE intends to measure reception sensitivity for each combination between a specific transmission beam and M reception beams, the receiving UE needs to know transmission positions of M measurement resources to which the specific transmission beam is applied. Herein, when an initial beam pairing procedure is supported, the transmission positions of the beam measurement resources may need to be delivered to the receiving UE prior to beam pairing.

Meanwhile, when inter-UE communication (e.g., SL communication) is performed between UEs, there may be information that is agreed and/or configured in advance, and a transmission position of a beam measurement resource may be determined based on the pre-agreed and/or pre-configured information.

Meanwhile, in inter-UE communication (e.g., SL communication) according to an embodiment of the present disclosure, sensing-based resource selection may be supported to mitigate inter-link interference. For example, a UE may define a set of transmission resources for resource reservation and/or allocation, and may configure a sensing resource set preceding the transmission resource set. The UE may detect control signals transmitted by other UEs (e.g., inter-UE control information (e.g., SCI)) in the sensing resource set, measure reserved resources and reception sensitivity for the corresponding resources (e.g., reference signal received power (RSRP)), and select transmission resources from remaining resources excluding resources having reception sensitivity equal to or greater than a predetermined reference value. Such a sensing-based resource selection procedure is a design philosophy of inter-UE communication (e.g., SL communication) for mitigating interference without centralized control, and may be desirably considered also when transmitting beam measurement resources for inter-UE communication (e.g., SL communication).

Therefore, according to an embodiment of the present disclosure, a scheme where when inter-UE communication (e.g., SL communication) is performed between a first UE and a second UE, first potential transmission resource information to which first transmission beam information is applied is agreed and/or configured in advance, the first UE selectively transmits a first control signal and/or a first beam measurement resource to which the first transmission beam information is applied on the first potential transmission resource, and the second UE performs beam measurement using the first control signal and/or the first beam measurement resource is proposed.

For example, a first UE may transmit a first control signal and/or a first beam measurement resource for beam measurement, and may configure first potential transmission resources on which the first control signal and/or the first beam measurement resource can be transmitted per inter-UE communication (e.g., SL communication) resource pool. For example, the first potential transmission resources may include time-domain transmission positions (e.g., slot indices) at which the first control signal and/or the first beam measurement resource can be transmitted.

The first potential transmission resource may include first transmission beam information, and the first transmission beam information may include identical or distinct transmission beam information for the first control signal and/or the first beam measurement resource. For example, the first transmission beam information may comprise information on transmission beam(s) applied to the first control signal and information on transmission beam(s) applied to the first beam measurement resource.

For example, the first control signal may be inter-UE control information (e.g., SCI) within an inter-UE physical control channel (e.g., PSCCH) and/or a control element (e.g., MAC CE) within an inter-UE physical shared channel (e.g., PSSCH), and the first beam measurement resource may be an inter-UE synchronization signal block (e.g., SL SSB) and/or a modified form of the inter-UE synchronization signal block (e.g., SL SSB) and/or an inter-UE channel state information reference signal (e.g., SL CSI-RS) and/or a modified form of the inter-UE channel state information reference signal (e.g., SL CSI-RS).

For example, a first UE may selectively transmit a first control signal and/or a first beam measurement resource on the first potential transmission resource. A second UE may attempt to receive the first control signal and/or the first beam measurement resource on the first potential transmission resource, and when it is determined that the first control signal and/or the first beam measurement resource has been successfully received, may perform beam measurement using the corresponding signal.

For example, when detection of the first control signal is successful, it may be determined that the first beam measurement resource and/or a beam measurement resource indicated by the first control signal is valid, and beam measurement may be performed. When the second UE performs beam measurement using the first control signal, a resource for beam measurement may be transmitted within the first potential transmission resource or may be transmitted on a transmission resource indicated by the first control signal.

According to the proposed scheme of the present disclosure, a transmitting UE may selectively transmit beam measurement resources so as not to exacerbate interference by considering an interference situation, and a receiving UE may opportunistically measure reception sensitivity for each combination of a transmission beam and a reception beam by detecting and measuring transmission resources per transmission beam with one or more reception beams at an agreed and/or configured resource position.

Herein, for example, first potential transmission resource information on which transmission of a beam measurement resource provided by a transmitting UE to a receiving UE is performed may be reconfigured and/or updated. For example, when the transmitting UE performs sensing-based selection of a beam measurement transmission resource on the first potential transmission resource that has been signaled in advance, when interference equal to or greater than a preconfigured threshold level is measured, or when an increase in a reference signal received power (e.g., RSRP) threshold used for idle resource determination exceeds a preconfigured allowable limit, or when a preconfigured timer expires, the transmitting UE may reconfigure and/or update the first potential transmission resource information.

The method of Proposal #01 may be applied in combination with other proposed scheme(s) to the extent that it does not conflict with the operations disclosed herein.

Proposal #01-01

According to an embodiment of the present disclosure, when communication between a first UE and a second UE is performed, the UEs agree and/or configure in advance first potential transmission resource information including first transmission beam information, and the first UE may selectively transmit a first control signal and/or a first beam measurement resource to which the first transmission beam information is applied on the first potential transmission resource.

In this case, when the first UE selects the first potential transmission resource by performing a sensing-based resource selection procedure, transmission of the first control signal and/or the first beam measurement resource on the selected first potential transmission resource may be allowed.

Herein, for example, when a sensing-based resource selection procedure is performed, a sensing target resource set may be composed of the first potential transmission resources.

Herein, for example, when a sensing-based resource selection procedure is performed, a transmitting UE may select a resource when reception strength for a specific resource is equal to or less than a first reference value. The first reference value for selecting a data resource and the first reference value for selecting a beam measurement resource may be different.

Herein, for example, when a sensing-based resource selection procedure is performed, a sensing interval may be related to the first potential transmission resource on which the first UE attempts transmission.

Herein, for example, resource selection and resource reservation information for the first potential transmission resource may be delivered in a third control signal preceding the first potential transmission resource. First transmission beam information may be applied to the third control signal.

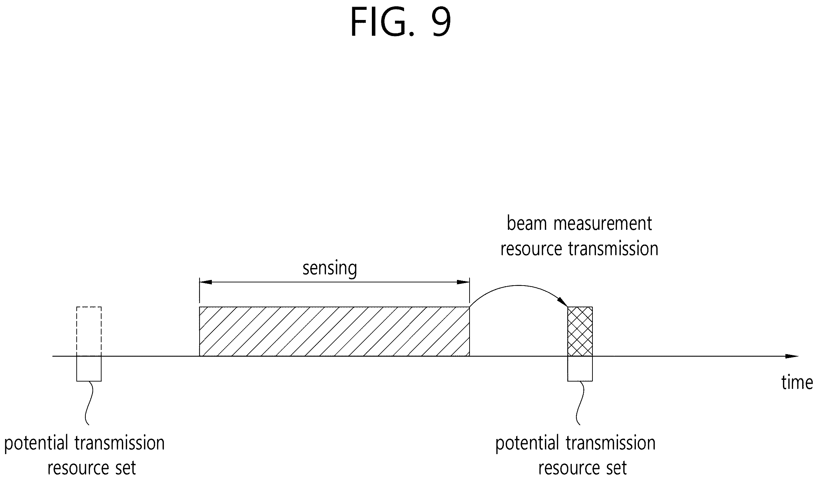

FIG. 9 shows a beam measurement resource determined based on sensing, according to an embodiment of the present disclosure. The embodiment of FIG. 9 may be combined with various embodiments of the present disclosure.

Referring to FIG. 9, when inter-UE communication (e.g., SL communication) is performed between a first UE and a second UE, the first UE may perform a sensing-based resource selection procedure before transmitting a first control signal and/or a first beam measurement resource for beam measurement.

For example, a first UE may configure a sensing target resource set with first potential transmission resources within a certain time interval, and may select resources having reception strength equal to or less than a certain reference value as transmission candidate resources. Herein, when the number of transmission candidate resources is less than a certain ratio within the sensing target resource set, the first UE may increase the reference value for the reception strength and repeatedly perform the sensing procedure.

The sensing-based resource selection procedure for allocating a beam measurement resource may be distinguished from a sensing-based resource selection procedure for allocating a data resource, and a reference value for reception strength may be different. For example, the sensing target resource set may be linked to a position of a first potential transmission resource that the first UE intends to transmit. For example, an interval in which sensing is to be performed may be implied with respect to the first potential transmission resource. For example, when a third control signal preceding the first potential transmission resource exists, the third control signal may include resource selection and resource reservation information for the first potential transmission resource. For example, first transmission beam information may be applied to the third control signal, and the third control signal may deliver transmission of the first potential transmission resource reserved in the corresponding transmission beam direction.

According to the proposed method of the present disclosure, a transmitting UE may selectively transmit beam measurement resources by considering an interference situation so as not to exacerbate interference, and a receiving UE may opportunistically measure reception sensitivity for each combination of a transmission beam and a reception beam by detecting and measuring transmission resources per transmission beam based on one or more reception beams at an agreed and/or configured resource position.

The method of Proposal #01-01 may be applied in combination with other proposed scheme(s) to the extent that it does not conflict with the operations.

Proposal #01-02

According to an embodiment of the present disclosure, when communication between a first UE and a second UE is performed, the UEs agree and/or configure in advance first potential transmission resource information including first transmission beam information, and when the first UE selectively transmits a first control signal and/or a first beam measurement resource to which the first transmission beam information is applied on the first potential transmission resource, the first control signal may reserve transmission of a second control signal and/or a second beam measurement resource on a second potential transmission resource different from the first potential transmission resource.

Herein, for example, second transmission beam information that is identical to or distinct from the first transmission beam information may be applied to the second control signal and/or the second beam measurement resource. When the beam information is different, the second transmission beam information may be delivered to the second UE in a manner different from that of the first transmission beam information. For example, the first UE may indicate the second transmission beam information in the first control signal.

Herein, the second potential transmission resource may be selected based on a sensing result.

Herein, when the second UE receives the first control signal, the second UE may attempt beam measurement using the second control signal and/or the second beam measurement resource on the second potential transmission resource.

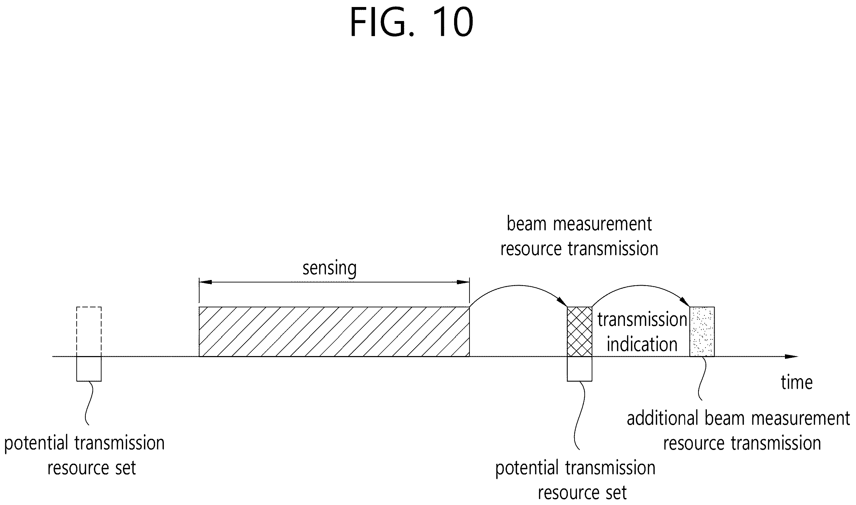

FIG. 10 shows a beam measurement resource determined based on a control signal, according to an embodiment of the present disclosure. The embodiment of FIG. 10 may be combined with various embodiments of the present disclosure.

Referring to FIG. 10, when inter-UE communication (e.g., SL communication) is performed between a first UE and a second UE, a first control signal and/or a first beam measurement resource for supporting beam pairing on a first potential transmission resource that is periodically defined according to the proposed scheme(s) of the present disclosure may be transmitted. Herein, the first potential transmission resource may be configured with a relatively long period, and following such a period may cause a delay in a beam measurement procedure.

For example, for the purpose of reducing the measurement delay, when transmitting the first control signal and/or the first beam measurement resource, transmission of a second control signal and/or a second beam measurement resource on a resource other than the first potential transmission resource, for example, on a second potential transmission resource, may be reserved through the first control signal.

For example, when transmitting the first control signal and/or the first beam measurement resource, the first UE may indicate repeated transmission of the first control signal and/or the first beam measurement resource within a second potential transmission resource. Herein, the second UE may perform a reception beam sweeping operation for the repeated transmission. Herein, beam sweeping may mean an operation in which a transmitting device sequentially changes a beam direction in a time domain when operating a plurality of directional beams. Herein, for example, the second potential transmission resource on which the second control signal and/or the second beam measurement resource is to be transmitted may be selected based on sensing.

The method of Proposal #01-02 may be applied in combination with other proposed scheme(s) to the extent that it does not conflict with the operations.


Proposal #01-03

According to an embodiment of the present disclosure, when communication between a first UE and a second UE is performed, the UEs agree and/or configure in advance first potential transmission resource information including first transmission beam information, the first UE selectively transmits a first control signal and/or a first beam measurement resource to which the first transmission beam information is applied on the first potential transmission resource, and when the second UE performs beam measurement using the first control signal and/or the first beam measurement resource on the first potential transmission resource, the second UE may perform beam measurement only when detection of the first control signal and/or the first beam measurement resource is successful.

Herein, for example, a case in which detection of the first control signal and/or the first beam measurement resource is successful may include a case in which reception strength of a specific signal (e.g., SL-reference signal received power (e.g., RSRP)) is equal to or greater than a certain reference value and/or a case in which demodulation of specific data (e.g., inter-UE control information (e.g., SCI)) is successful.

According to an embodiment of the present disclosure, when inter-UE communication (e.g., SL communication) is performed between a first UE and a second UE, a first control signal and/or a first beam measurement resource for supporting beam pairing may be transmitted on a first potential transmission resource that is periodically defined according to the proposed scheme(s) of the present disclosure. Herein, the first UE may opportunistically transmit the first control signal and/or the first beam measurement resource based on sensing, and the second UE may utilize the first control signal and/or the first beam measurement resource for beam measurement.

Herein, when the second UE fails to detect the first beam measurement resource, there may be a need to distinguish whether the failure is due to a case in which the first UE transmitted the first beam measurement resource but a received signal strength is negligible, or a case in which the first UE did not transmit the first beam measurement resource. For example, upon successful detection of the first control signal, the second UE may determine that a corresponding first beam measurement resource is valid and may utilize the first beam measurement resource for beam measurement.

The method of Proposal #01-03 may be applied in combination with other proposed scheme(s) to the extent that it does not conflict with the operations.


Proposal #02

According to an embodiment of the present disclosure, when communication between a first UE and a second UE is performed, the UEs agree and/or configure in advance first transmission resource information including first transmission beam information, the first UE periodically transmits a first control signal and/or a first beam measurement resource to which the first transmission beam information is applied on the first transmission resource, reserves a second potential transmission resource different from the first transmission resource through the first control signal, selectively transmits a second control signal and/or a second beam measurement resource on the second potential transmission resource, and the second UE may perform beam measurement using the first control signal and/or the first beam measurement resource and/or the second control signal and/or the second beam measurement resource.

Herein, for example, second transmission beam information that is identical to or distinct from the first transmission beam information may be applied to the second control signal and/or the second beam measurement resource. When the beam information is different, the second transmission beam information may be delivered to the second UE in a manner different from that of the first transmission beam information. For example, the first UE may indicate the second transmission beam information through the first control signal.

Herein, when the first UE selects the second potential transmission resource through a sensing-based resource selection procedure, transmission of the second control signal and/or the second beam measurement resource on the selected second potential transmission resource may be allowed.

Herein, when the first control signal and/or the first beam measurement resource is transmitted within a pre-agreed and/or pre-configured resource pool, information such as a transmission period and an offset of the first control signal and/or the first beam measurement resource may be interpreted and applied with reference to logical slot indexing defined on the pre-configured resource pool.

According to an embodiment of the present disclosure, when inter-UE communication (e.g., SL communication) is performed between a first UE and a second UE, a transmitting UE may transmit periodic beam measurement resources for beam measurement. For example, the first UE may periodically transmit a first control signal and/or a first beam measurement resource to which first transmission beam information is applied on a first transmission resource. Herein, the first transmission resource may be excluded from a resource pool for inter-UE communication (e.g., SL communication)-based data communication, and may be designed such that the first beam measurement resource periodically transmitted on the first transmission resource does not collide with data transmission.

Herein, for example, the first control signal may opportunistically allocate and/or reserve transmission of an additional second control signal and/or a second beam measurement resource transmitted within a second potential transmission resource, and the second potential transmission resource may exist within a resource pool in which data transmission is allowed. For example, the second control signal and/or the second beam measurement resource may be transmitted on a resource that is determined to be not congested after the transmitting UE performs sensing.

The method of Proposal #02 may be applied in combination with other proposed scheme(s) to the extent that it does not conflict with the operations disclosed herein.

Proposal #03

According to an embodiment of the present disclosure, when communication between a first UE and a second UE is performed, when a transmitting UE transmits a first control signal and/or a first beam measurement resource for beam measurement and transmits a second control signal and/or a second beam measurement resource, if the transmission of the second control signal and/or the second beam measurement resource is indicated by the first control signal and/or the first beam measurement resource, or is triggered due to a beam reporting resource corresponding to transmission of the first control signal and/or the first beam measurement resource, the receiving UE may assume that a reception beam and/or a reception spatial filter applied to the first control signal and/or the first beam measurement resource is applied to reception of the second control signal and/or the second beam measurement resource.

According to an embodiment of the present disclosure, when inter-UE communication (e.g., SL communication) is performed between a first UE and a second UE, a transmitting UE may transmit periodic beam measurement resources for beam measurement. For example, the periodic beam measurement resource may be a first beam measurement resource and may be in a wide-beam form transmitted in a relatively broad direction.

Herein, a transmitting UE may transmit a second beam measurement resource having a narrower beam direction than the first beam measurement resource in order to improve beam pairing performance with a receiving UE. Herein, transmission of the second beam measurement resource may be triggered by transmission of the first beam measurement resource.

For example, transmission for the second beam measurement resource may be triggered when a UE indicates transmission for the second beam measurement resource while transmitting the first beam measurement resource, or when a beam report for the first beam measurement resource is received. For example, before a higher-layer link such as PC5 is established between UEs, it may be difficult for the transmitting UE to configure reception beam and/or spatial filter information applied for the second beam measurement resource, and thus a mutually agreed method may need to be followed.

Therefore, in the present disclosure, in such a case, a method is proposed in which, as a reception beam and/or reception spatial filter for a second control signal and/or a second beam measurement resource, a receiving UE assumes that a reception beam and/or a reception spatial filter for a signal that triggered the corresponding signal, that is, a first control signal and/or first beam measurement resource signal is applied.

For example, according to the proposed method, when inter-UE beam measurement resources are transmitted, a first beam measurement resource and a second beam measurement resource having hierarchical beam directions may be transmitted. Herein, a receiving UE may first start searching for the first beam measurement resource having a relatively wide beam direction, and then may proceed with transmission request for and/or measurement procedure of the second beam measurement resource.

The method of Proposal #03 may be applied in combination with other proposed scheme(s) to the extent that it does not conflict with the operations disclosed herein.

Proposal #04

According to an embodiment of the present disclosure, when communication between a first UE and a second UE is performed, when a UE supports transmission of a first control signal and/or a first beam measurement resource for beam measurement, relationship information between a first beam and/or a spatial filter applied to the first control signal and a second beam and/or a spatial filter applied to the first beam measurement resource may be agreed and/or configured in advance and/or may be provided through the first control signal.

Herein, for example, the relationship information between beams and/or spatial filters may include a case in which a first beam and/or spatial filter is identical to a second beam and/or spatial filter, and/or a case in which the first beam and/or spatial filter is different from the second beam and/or spatial filter, and/or a case in which the first beam and/or spatial filter includes a direction of the second beam and/or spatial filter but is different therefrom.

Herein, for example, a number of first beams and/or spatial filters and a number of second beams and/or spatial filters may be distinct from each other, and this may be agreed and/or configured in advance.

According to an embodiment of the present disclosure, when inter-UE communication (e.g., SL communication) is performed between a first UE and a second UE, and when a UE supports transmission of a first control signal and/or a first beam measurement resource for beam measurement, relationship information between a first beam and/or a spatial filter applied to the first control signal and a second beam and/or a spatial filter applied to the first beam measurement resource may be agreed and/or configured in advance between the UEs.

Herein, for example, the relationship information between beams and/or spatial filters may include a case in which a first beam and/or spatial filter is identical to a second beam and/or spatial filter, and/or a case in which the first beam and/or spatial filter is different from the second beam and/or spatial filter, and/or a case in which the first beam and/or spatial filter includes a direction of the second beam and/or spatial filter but is different therefrom. Herein, one or more types may be defined in advance as the relationship information between beams and/or spatial filters, and information on an applied type among the types may be mutually known.

The method of Proposal #04 may be applied in combination with other proposed scheme(s) to the extent that it does not conflict with the operations disclosed herein.

Proposal #04-01

According to an embodiment of the present disclosure, when communication between a first UE and a second UE is performed, and when a UE supports transmission of a first control signal and/or a first beam measurement resource for beam measurement, the first beam measurement resource is composed of a plurality of sub-resources distinguished in a time domain, the first UE transmits by applying different and/or independent transmission beams for respective sub-resources of the first beam measurement resource, the first control signal is transmitted by applying a single transmission beam corresponding to a beam group applied to the sub-resource(s) of the first beam measurement resource, and the second UE may assume/apply a beam and/or a spatial filter applied for reception of the first control signal when receiving each sub-resource of the first beam measurement resource.

Herein, for example, the first control signal and the first beam measurement resource may be transmitted in a time-division multiplexing manner within a slot, and through this, different transmission beam gains may be experienced.

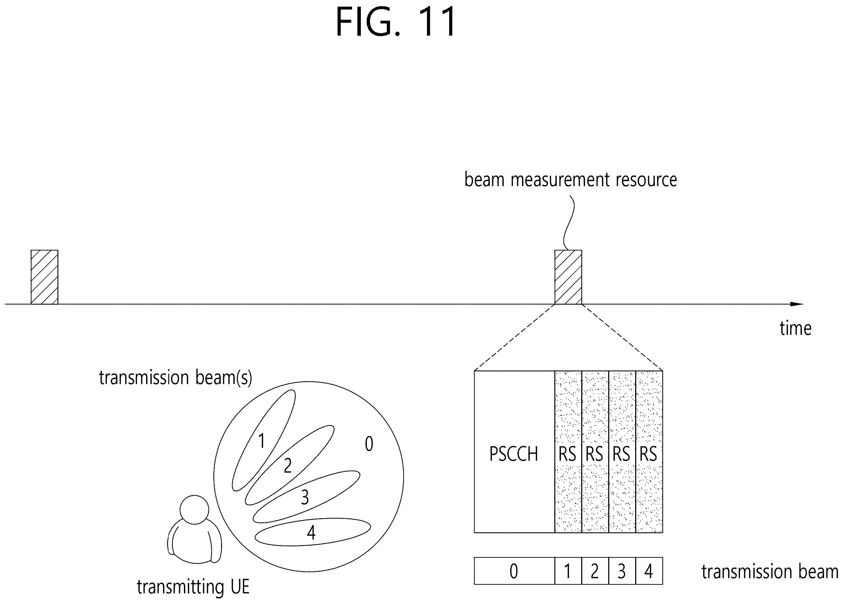

FIG. 11 shows a beam measurement resource transmitted in a time-division multiplexing manner, according to an embodiment of the present disclosure. The embodiment of FIG. 11 may be combined with various embodiments of the present disclosure.

Referring to FIG. 11, when inter-UE communication (e.g., SL communication) is performed between a first UE and a second UE, and when a UE supports transmission of a first control signal and/or a first beam measurement resource for beam measurement, the first beam measurement resource may be transmitted in a structure/form prioritizing transmission beam sweeping or in a structure/form prioritizing reception beam sweeping.

Herein, a structure/form prioritizing transmission beam sweeping may be a structure/form in which the first beam measurement resource is divided into a plurality of sub-resources in a time domain, and different transmission beams are applied to respective sub-resources. Herein, the first control signal transmitted along with the first beam measurement resource may be transmitted such that it is receivable in all transmission beam directions in which the first beam measurement resource is transmitted. For example, the first control signal may be transmitted by applying a single transmission beam corresponding to a beam group applied to the sub-resource(s) of the first beam measurement resource.

Herein, when receiving and/or measuring each sub-resource of the first beam measurement resource, the receiving UE may apply the same reception beam and/or spatial filter in order to perform a fair comparison among the transmission beams. For example, a beam and/or a spatial filter applied for reception of the first control signal may be assumed and/or applied.

The method of Proposal #04-01 may be applied in combination with other proposed scheme(s) to the extent that it does not conflict with the operations disclosed herein.

Proposal #04-02

According to an embodiment of the present disclosure, when communication between a first UE and a second UE is performed, and when a UE is capable of supporting transmission of a first control signal and/or a first beam measurement resource for beam measurement, the first beam measurement resource is composed of a plurality of sub-resources distinguished in a time domain, the first UE transmits by applying the same transmission beam for each sub-resource, the first control signal is transmitted by applying the same transmission beam as the beam applied to the sub-resource(s) of the first beam measurement resource, and the second UE may assume and/or apply a beam and/or a spatial filter independent from a beam and/or a spatial filter applied for reception of the first control signal when receiving each sub-resource of the first beam measurement resource.

Herein, for example, the first control signal and the first beam measurement resource may be transmitted in a time-division multiplexing manner within a slot, and may experience the same transmission beam gain.

Herein, for example, when receiving each repetition of the first beam measurement resource, the second UE may utilize second beams and spatial filters in multiple directions, and a selection procedure of the second beams and spatial filters may follow UE implementation.

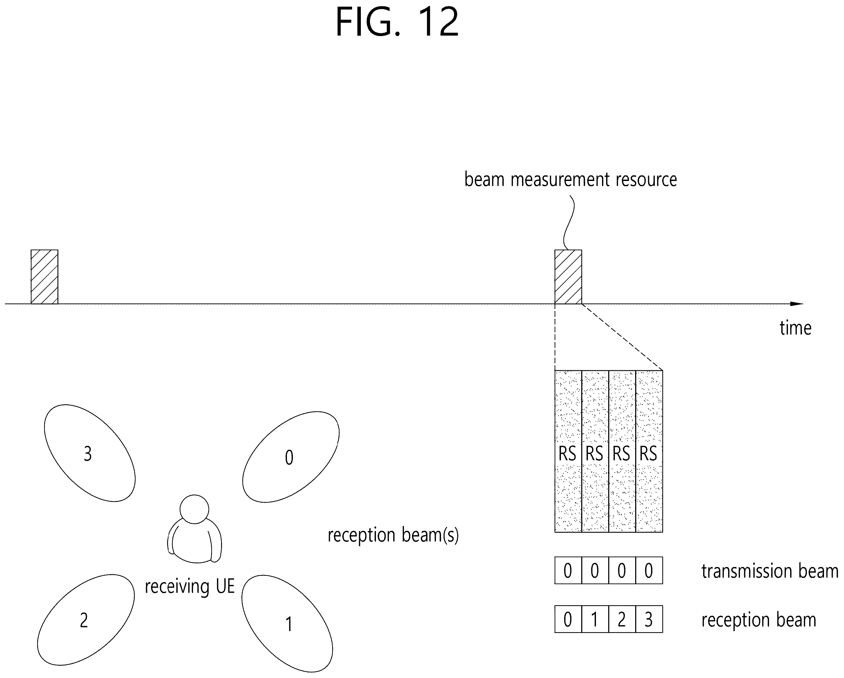

FIG. 12 shows a beam measurement resource in which a beam sweeping operation is performed according to an embodiment of the present disclosure. The embodiment of FIG. 12 may be combined with various embodiments of the present disclosure.

Referring to FIG. 12, when inter-UE communication (e.g., SL communication) is performed between a first UE and a second UE, and when a UE supports transmission of a first control signal and/or a first beam measurement resource for beam measurement, the first beam measurement resource may be transmitted in a structure/form prioritizing transmission beam sweeping or in a structure/form prioritizing reception beam sweeping.

Herein, for example, a structure/form prioritizing transmission beam sweeping may be a structure/form in which the first beam measurement resource is divided into a plurality of sub-resources in a time domain, and the same transmission beam is applied to each sub-resource. Herein, the first control signal transmitted along with the first beam measurement resource may be transmitted using the same beam as the transmission beam used for transmitting the first beam measurement resource.

Herein, for example, a receiving UE may perform a reception beam sweeping operation when receiving the first beam measurement resource. For example, when receiving and/or measuring each sub-resource of the first beam measurement resource, the receiving UE may apply different reception beams and/or spatial filters. For example, when receiving each sub-resource of the first beam measurement resource, the second UE may assume/apply beams and spatial filters independent from beams and spatial filters applied for reception of the first control signal.

The method of Proposal #04-02 may be applied in combination with other proposed scheme(s) to the extent that it does not conflict with the operations disclosed herein.

Proposal #04-03

According to an embodiment of the present disclosure, when communication between a first UE and a second UE is performed, a beam measurement and reporting procedure composed of one or more of the following steps may be performed.

Step 1) A first UE configures a first beam measurement resource as a plurality of sub-resources distinguished in a time domain, applies different and/or independent transmission beams for respective sub-resources of the first beam measurement resource, applies a single transmission beam corresponding to a beam group applied to the first beam measurement resource to a first control signal, and may transmit the first control signal and/or the first beam measurement resource.

Step 2) A second UE determines a common beam and/or a common spatial filter based on detection and/or reception performance for the first control signal, and may measure reception strength and/or reception performance per beam for each sub-resource of the first beam measurement resource using the common beam and/or the common spatial filter.

Step 3) A second UE may report, to a first UE, beam measurement results based on the first control signal and the first beam measurement resource.

Step 4) A second UE may request transmission of a second beam measurement resource.

Step 5) A first UE configures a second beam measurement resource as a plurality of sub-resources distinguished in a time domain, applies the same transmission beam per sub-resource of the second beam measurement resource, applies the same transmission beam as the transmission beam applied to the first beam measurement resource to a second control signal, and may transmit the second control signal and/or the second beam measurement resource.

Herein, for example, a transmission beam applied to the second beam measurement resource in Step 5 may be one of transmission beams reported by the second UE in Step 3 and/or Step 4.

Herein, for example, in Step 5, the second UE may search for an optimal reception beam by performing reception beam sweeping or the like for the second beam measurement resource.

According to an embodiment of the present disclosure, when inter-UE communication (e.g., SL communication) is performed between a first UE and a second UE, the following beam pairing procedure may be considered. For example, a transmitting UE may configure a beam measurement resource as a plurality of sub-resources distinguished in a time domain and transmit the beam measurement resource after applying different transmission beams to the respective sub-resources, and a control signal may be transmitted after applying a single transmission beam corresponding to a beam group.

Herein, for example, a receiving UE may detect a beam group based on reception performance of a control signal, and may measure beams of sub-resources by applying a spatial filter for reception of the control signal to reception of the beam measurement resource.

Thereafter, when reception beam refinement is possible for the detected beam group, the receiving UE may request a beam measurement resource for a reception beam sweeping (e.g., P3) procedure during beam reporting. A transmitting UE receiving the request configures the beam measurement resource as a plurality of sub-resources distinguished in a time domain, transmits it after applying beams reported by the receiving UE, and the receiving UE may perform reception beam optimization using the beam measurement resource.

The method of Proposal #04-03 may be applied in combination with other proposed scheme(s) to the extent that it does not conflict with the operations disclosed herein.

Proposal #05

According to an embodiment of the present disclosure, when communication between a first UE and a second UE is performed, when the first UE transmits a first control signal and/or a first beam measurement resource to which first transmission beam information is applied on a first transmission resource, the first UE may indicate whether the resource is dedicated for beam measurement through QoS information in the first control signal.

Herein, when it is indicated, through quality of service(QoS), that a resource is dedicated for beam measurement, legacy fields within the first control signal that have been used for data demodulation may be interpreted and/or utilized for other purposes. For example, the legacy fields may be utilized to indicate synchronization signal information having a QCL relationship with the first beam measurement resource.

Herein, for example, a QoS value for indicating whether a resource is dedicated for beam measurement (e.g., standalone) may be agreed and/or configured in advance between UEs.

According to an embodiment of the present disclosure, when inter-UE communication (e.g., SL communication) is performed between a first UE and a second UE, QoS information of data transmitted through a control signal such as inter-UE control information (e.g., SCI) may be provided together.

Herein, for example, when a dedicated resource for beam measurement is introduced, since the dedicated resource for beam measurement is not for data transmission, it may need to be distinguished through a control signal such as inter-UE control information (e.g., SCI).

For example, for a beam-measurement-dedicated resource such as a "Standalone SL CSI-RS Only" transmission, a unique QoS value may be assigned in a QoS field within inter-UE control information (e.g., SCI). Herein, when the QoS field indicates a beam-measurement-dedicated resource, other fields within the control signal may be reinterpreted as dedicated fields for the beam measurement resource.

For example, in inter-UE communication (e.g., SL communication) according to an embodiment of the present disclosure, first-stage inter-UE control information (e.g., SCI) may be transmitted in an inter-UE control information (e.g., SCI) format 1-A, and may include, in addition to a bit field indicating QoS, various bit fields for data transmission such as frequency-domain resource allocation, time-domain resource allocation, a resource reservation period, a demodulation reference signal (e.g., DM-RS) pattern, a second-stage inter-UE control information (e.g., SCI) format, a number of demodulation reference signal (e.g., DM-RS) ports, and an MCS.

For example, when it is indicated through QoS information that the corresponding resource is a beam-measurement-dedicated resource, some of the above fields may be utilized for quasi co-location (QCL) information and/or transmission configuration indication (TCI) purposes. The QCL and/or TCI information may indicate that the beam-measurement-dedicated resource is transmitted with the same or a similar spatial filter as another reference signal.

The method of Proposal #05 may be applied in combination with other proposed scheme(s) to the extent that it does not conflict with the operations disclosed herein.

Proposal #06

According to an embodiment of the present disclosure, when communication between a first UE and a second UE is performed, when reception strength of a second transmission resource is predicted and/or measured, the reception strength may be predicted and/or measured by adding a transmission beam and/or reception beam gain difference between the second transmission resource and a first transmission resource to reception strength measured using a reference signal within the first transmission resource linked to the second transmission resource.

According to an embodiment of the present disclosure, when inter-UE communication (e.g., SL communication) is performed between a first UE and a second UE, the UE may support a channel sensing operation to support transmission such as Mode 2. Herein, the UE may recognize future reserved transmission resources through control signals measured within a sensing interval.

Herein, the UE may predict reception sensitivity that the reserved transmission resource may impose on a channel based on reception sensitivity measured within a sensing interval. However, when reservation information is identified in the sensing interval, a transmission beam and/or a reception beam applied to a received transmission resource may be different from those applied to the reserved transmission resource, and a difference in reception sensitivity corresponding to a beam gain difference may occur.

Therefore, in the present disclosure, when reception strength of a second transmission resource is predicted and/or measured, a method is proposed in which the reception strength is predicted and/or measured in a manner of adding a transmission beam and/or reception beam gain difference between the second transmission resource and a first transmission resource to reception strength measured using a reference signal within the first transmission resource linked to the second transmission resource.

The method of Proposal #06 may be applied in combination with other proposed scheme(s) to the extent that it does not conflict with the operations disclosed herein.

Proposal #07

According to an embodiment of the present disclosure, when a UE transmits a reference signal for beam measurement purpose along with a related inter-UE physical channel (e.g., PSCCH/PSSCH), the UE may transmit the reference signal for beam measurement purpose such that a power spectral density (PSD) and/or a size of allocated frequency resources are maintained among reference signal(s) for beam measurement purpose transmitted at different time points.

Herein, for example, the reference signal for beam measurement purpose may be in a form of a "non-standalone SL CSI-RS."

Herein, for example, the reference signal for beam measurement purpose may follow a transmission power control scheme that is independent from and/or distinct from a transmission power control scheme for an inter-UE physical channel (e.g., PSCCH/PSSCH) transmitted along with the reference signal for beam measurement purpose.

Herein, for example, the reference signal for beam measurement purpose may follow a frequency resource allocation scheme that is independent from and/or distinct from a frequency resource allocation scheme for an inter-UE physical channel (e.g., PSCCH/PSSCH) transmitted along with the reference signal for beam measurement purpose.

Herein, for example, even when PSDs of inter-UE physical channels (e.g., PSCCH/PSSCH) transmitted at different time points are different, a PSD of a related reference signal for beam measurement purpose may be transmitted to be the same.

Herein, for example, even when sizes of allocated frequency resources of inter-UE physical channels (e.g., PSCCH/PSSCH) transmitted at different time points are different, a size of allocated frequency resources of a related reference signal for beam measurement purpose may be transmitted to be the same.

Herein, for example, a transmitting UE may provide a receiving UE with information for a transmission interval and/or a resource group in which a PSD of a reference signal for beam measurement purpose is maintained.

Herein, for example, the reference signal for beam measurement purpose may be transmitted in a time-division multiplexing manner with an inter-UE physical channel (e.g., PSCCH/PSSCH), and may follow a PSD of the inter-UE physical channel (e.g., PSCCH/PSSCH).

Herein, for example, the different time points may be different symbols and/or different slots.

Herein, for example, the PSD may be maintained and/or determined with reference to a first transmission time point at which a beam sweeping operation is started or a preconfigured transmission time point of a reference signal for beam measurement purpose.

Herein, for example, for the reference signal for beam measurement purpose, a path-loss-based power control scheme (for inter-UE communication (e.g., SL communication) or a base station-between-UE link) may not be applied. For example, a fixed transmission power may be applied, or the reference signal may be transmitted with a maximum transmission power.

According to an embodiment of the present disclosure, assuming that inter-UE communication (e.g., SL communication) is performed between UEs, a UE may transmit a reference signal for beam measurement purpose in order to support multi-beam-based inter-UE transmission (e.g., SL transmission). For example, when the reference signal for beam measurement purpose is in a form of a "non-standalone SL CSI-RS," the reference signal may be transmitted along with an inter-UE physical channel (e.g., PSCCH/PSSCH).

Herein, when a transmitting UE is capable of transmitting the reference signal for beam measurement purpose at a plurality of time points corresponding to a plurality of transmission beams, a receiving UE may measure a reference signal received power (e.g., RSRP) value (per beam) for the plurality of transmissions, and may select an optimal beam by comparing the reference signal received power (e.g., RSRP) (per beam).

Herein, for a fair comparison of (per beam) reference signal received power (e.g., RSRP), a PSD of a reference signal for beam measurement purpose may need to be controlled to be maintained across a plurality of transmissions. Therefore, in the present disclosure, a method is proposed in which, when a UE transmits a reference signal for beam measurement purpose (e.g., non-standalone SL CSI-RS) along with an inter-UE physical control channel (e.g., PSCCH) and/or an inter-UE physical shared channel (e.g., PSSCH), the reference signal for beam measurement purpose is transmitted such that a PSD magnitude is maintained among reference signal(s) for beam measurement purpose transmitted at different time points.

For example, the reference signal for beam measurement purpose may follow a transmission power control scheme that is independent from and/or distinct from a transmission power control scheme for an inter-UE physical channel (e.g., PSCCH/PSSCH) transmitted along with the reference signal for beam measurement purpose, and through this, transmission power may be controlled such that a PSD of the reference signal for beam measurement purpose is maintained across a plurality of transmissions.

For example, the reference signal for beam measurement purpose may follow a frequency resource allocation scheme that is independent from and/or distinct from a frequency resource allocation scheme for an inter-UE physical channel (e.g., PSCCH/PSSCH) transmitted along with the reference signal for beam measurement purpose, and through this, frequency resources may be allocated such that a PSD of the reference signal for beam measurement purpose is maintained across a plurality of transmissions.

For example, as a modification of the proposed method, when a UE transmits a periodic reference signal for beam measurement purpose, transmission power control for the reference signal for beam measurement purpose may be operated independently. For example, the UE may operate a power control loop separate from an inter-UE physical channel (e.g., PSCCH/PSSCH/PSFCH) for the reference signal for beam measurement purpose.

For example, as a modification of the proposed method, when a UE measures (per beam) reference signal received power (e.g., RSRP) based on a reference signal for beam measurement purpose, the UE may measure (per beam) reference signal received power (e.g., RSRP) converted based on a (pre)configured frequency resource size between UEs. For example, when the (pre)configured frequency resource size is A and an actually transmitted frequency resource size is 2A, a reference signal received power (e.g., RSRP) value measured using the actually transmitted resource may be corrected by 3 dB corresponding to a difference in resource size.

According to the proposed method of the present disclosure, an identical PSD is ensured among reference signals for beam measurement purpose transmitted for a plurality of transmission beams, thereby enabling a fair comparison of reference signal received power (e.g., RSRP). Through this, when a receiving UE assumes the same transmission power and/or PSD, the receiving UE may more easily search for an optimal transmission beam.

The method of Proposal #07 may be applied in combination with other proposed scheme(s) to the extent that it does not conflict with the operations disclosed herein.

Proposal #08

According to an embodiment of the present disclosure, when a UE transmits a reference signal for beam measurement purpose along with a related inter-UE physical channel (e.g., PSCCH/PSSCH), the UE may implicitly indicate a time resource and/or a frequency resource and/or a code resource and/or a beam resource of the reference signal for beam measurement purpose through transmission resources of the inter-UE physical channel (e.g., PSCCH/PSSCH).

For example, an implicit determination method of transmission resources of a reference signal for beam measurement purpose based on transmission resources of an inter-UE physical channel (e.g., PSCCH/PSSCH) may include one or more of the following procedures.

(1) A physical resource block (e.g., PRB) set for a reference signal for beam measurement purpose may be (pre)configured, and the physical resource block (e.g., PRB) set may be divided into S*N physical resource block (e.g., PRB) groups or physical resource block (e.g., PRB) interlaces.

 A. Herein, S may denote a number of sub-channels within a slot.
 B. Herein, N may denote a period in which a reference signal for beam measurement purpose can be transmitted, or a number of slots of a transmission interval of an inter-UE physical channel (e.g., PSCCH/PSSCH) capable of implicitly indicating the reference signal for beam measurement purpose.
 C. Herein, a physical resource block (e.g., PRB) interlace may refer to an interlace in units of physical resource blocks (e.g., PRBs), and may refer to a resource structure in which a plurality of physical resource blocks (e.g., PRBs) are present with a predetermined frequency spacing between adjacent physical resource blocks (e.g., PRBs).

(2) A physical resource block (e.g., PRB) group or a physical resource block (e.g., PRB) interlace may be selected.

A. Herein, a physical resource block (e.g., PRB) group or a physical resource block (e.g., PRB) interlace may be determined based on a transmission slot index/order of an inter-UE physical channel (e.g., PSCCH/PSSCH) and/or a transmission sub-channel index/order of an inter-UE physical channel (e.g., PSCCH/PSSCH).

(3) A frequency resource and/or a code resource within a physical resource block (e.g., PRB) may be selected.

A. Herein, a frequency resource and/or a code resource within a physical resource block (e.g., PRB) may be applied identically to all physical resource blocks (e.g., PRBs) within a physical resource block (e.g., PRB) group or a physical resource block (e.g., PRB) interlace.

B. Herein, a frequency resource and/or a code resource within a physical resource block (e.g., PRB) may be determined based on a Source ID and/or a Member ID and/or a Beam ID related to an inter-UE physical channel (e.g., PSCCH/PSSCH).

For example, when the above procedure is applied, indexing of a reference signal for beam measurement purpose may be determined in an order of time-division multiplexing (e.g., TDM) resource (e.g., symbol, slot) indexing, frequency-division multiplexing (e.g., FDM) resource (e.g., physical resource block (e.g., PRB) group, physical resource block (e.g., PRB) interlace) indexing, and code-division multiplexing (e.g., CDM) resource indexing (and/or in an order of frequency-division multiplexing (e.g., FDM) resource indexing, time-division multiplexing (e.g., TDM) resource indexing, and code-division multiplexing (e.g., CDM) resource indexing).

Herein, when different reference signal(s) for beam measurement purpose have the same resource allocation for a related inter-UE physical control channel (e.g., PSCCH) and/or an inter-UE physical shared channel (e.g., PSSCH), the reference signal resource(s) for beam measurement purpose may be distinguished in a frequency-division multiplexing (e.g., FDM) and/or code-division multiplexing (e.g., CDM) and/or time-division multiplexing (e.g., TDM) manner based on a Source ID and/or a Destination ID and/or a Member ID and/or a Beam ID and/or an index/identifier of the reference signal for beam measurement purpose.

Herein, for example, a time resource of a reference signal for beam measurement purpose may be determined based on a Beam ID and/or an index/identifier of the reference signal for beam measurement purpose (and/or a Source ID and/or a Destination ID), and a frequency resource and/or a code resource of the reference signal for beam measurement purpose may be determined based on a Source ID and/or a Destination ID and/or a transmission slot index/order of an inter-UE physical channel (e.g., PSCCH/PSSCH) and/or a transmission sub-channel index/order of an inter-UE physical channel (e.g., PSCCH/PSSCH) (and/or a Member ID and/or a Beam ID and/or an index/identifier of the reference signal for beam measurement purpose).

According to an embodiment of the present disclosure, assuming that inter-UE communication (e.g., SL communication) is performed between UEs, a UE may transmit a reference signal for beam measurement purpose in order to support multi-beam-based inter-UE transmission (e.g., SL transmission). For example, when the reference signal for beam measurement purpose is in a form of a "non-standalone SL CSI-RS," the reference signal may be transmitted along with an inter-UE physical channel (e.g., PSCCH/PSSCH).

Herein, some resource information of the reference signal for beam measurement purpose may be implicitly indicated from resource allocation information of a related inter-UE physical channel (e.g., PSCCH/PSSCH). For example, a scheme similar to a resource allocation scheme of an inter-UE physical feedback channel (e.g., PSFCH) for inter-UE communication (e.g., SL communication) may be followed.

For example, a physical resource block (e.g., PRB) set for a reference signal for beam measurement purpose is (pre)configured, and the physical resource block (e.g., PRB) set may be divided into S*N physical resource block (e.g., PRB) groups or physical resource block (e.g., PRB) interlaces. Herein, S denotes a number of sub-channels within a slot, and N may denote a period in which the reference signal for beam measurement purpose can be transmitted.

Herein, for example, a physical resource block (e.g., PRB) interlace may refer to an interlace in units of physical resource blocks (e.g., PRBs), and may refer to a resource structure in which a plurality of physical resource blocks (e.g., PRBs) are present with a certain frequency spacing between adjacent physical resource blocks (e.g., PRBs).

Herein, for example, a physical resource block (e.g., PRB) group or a physical resource block (e.g., PRB) interlace may be determined based on a slot index/order and/or a sub-channel index/order of an inter-UE physical channel (e.g., PSCCH/PSSCH) related to a reference signal for beam measurement purpose.

Herein, for example, a frequency resource and/or a code resource within a physical resource block (e.g., PRB) may be determined based on a Source ID and/or a Member ID indicated in an inter-UE physical channel (e.g., PSCCH/PSSCH) related to a reference signal for beam measurement purpose.

Herein, for example, a frequency resource and/or a code resource within a physical resource block (e.g., PRB) may be applied identically to all physical resource blocks (e.g., PRBs) within a physical resource block (e.g., PRB) group or a physical resource block (e.g., PRB) interlace.

According to the proposed method of the present disclosure, assuming that a UE applies a collision avoidance operation for an inter-UE physical channel (e.g., PSCCH/PSSCH), it may be expected that the collision avoidance operation is also applied to a resource for a reference signal for beam measurement purpose that is implicitly indicated. Through this, interference experienced by the reference signal for beam measurement purpose may be mitigated, and measurement accuracy may be improved.

The method of Proposal #08 may be applied in combination with other proposed scheme(s) to the extent that it does not conflict with the operations disclosed herein.

Proposal #09

According to an embodiment of the present disclosure, when a UE transmits a reference signal for beam measurement purpose, the UE may provide group identifier/indicator information for the reference signal for beam measurement purpose.

Herein, the group identifier/indicator information may be provided through (pre)configuration and/or PC5-RRC configuration and/or inter-UE control information (e.g., SCI) and/or a control element (e.g., MAC CE).

Herein, a receiving UE may assume that reference signal(s) for beam measurement purpose having the same group identifier/indicator information have been transmitted with the same PSD.

According to an embodiment of the present disclosure, assuming that inter-UE communication (e.g., SL communication) is performed between UEs, a UE may transmit a reference signal for beam measurement purpose in order to support multi-beam-based inter-UE transmission (e.g., SL transmission).

Herein, when a reference signal for beam measurement purpose is an aperiodic reference signal, a receiving UE may need to be able to recognize a resource group in which reception sensitivity of the beam measurement reference signal, such as reference signal received power (e.g., RSRP), is comparable.

Herein, for example, a transmitting UE may provide a receiving UE with group identifier/indicator information for a reference signal for beam measurement purpose. For example, the transmitting UE may indicate, in an inter-UE physical channel (e.g., PSCCH/PSSCH) related to the reference signal for beam measurement purpose, a group identifier to which the reference signal for beam measurement purpose belongs, and the receiving UE may assume that reference signal(s) for beam measurement purpose having the same group identifier/indicator information have been transmitted with the same PSD.

Herein, for example, a receiving UE may compare reception sensitivity of beam measurement reference signals, such as reference signal received power (e.g., RSRP), for reference signal(s) for beam measurement purpose having the same group identifier/indicator.

According to the proposed method of the present disclosure, a receiving UE may recognize a group of reference signals for beam measurement purpose to which a beam sweeping operation is applied, and may search for an optimal beam within a beam sweeping interval intended by a transmitting UE.

The method of Proposal #09 may be applied in combination with other proposed scheme(s) to the extent that it does not conflict with the operations disclosed herein.

Proposal #10

According to an embodiment of the present disclosure, when a UE transmits a reference signal for beam measurement purpose, the UE may provide information for a total number of transmissions and/or a current transmission number for the reference signal for beam measurement purpose.

Herein, for example, the reference signal for beam measurement purpose may be an aperiodic reference signal.

Herein, a UE may provide information for a total number of transmissions and/or a current transmission number for a reference signal for beam measurement purpose through inter-UE control information (e.g., SCI) and/or a control element (e.g., MAC CE) related to the reference signal for beam measurement purpose.

Herein, a receiving UE may feedback, to a transmitting UE, information for reference signal(s) for beam measurement purpose that the receiving UE has not received.

According to an embodiment of the present disclosure, assuming that inter-UE communication (e.g., SL communication) is performed between UEs, a UE may transmit a reference signal for beam measurement purpose in order to support multi-beam-based inter-UE transmission (e.g., SL transmission). For example, when the reference signal for beam measurement purpose is in a form of a "non-standalone SL CSI-RS," the reference signal may be transmitted along with an inter-UE physical channel (e.g., PSCCH/PSSCH).

Herein, when a transmitting UE is capable of transmitting the reference signal for beam measurement purpose at a plurality of time points corresponding to a plurality of transmission beams, a receiving UE may measure a reference signal received power (e.g., RSRP) value (per beam) for the plurality of transmissions, and may select an optimal beam by comparing the reference signal received power (e.g., RSRP) (per beam).

Herein, a receiving UE may need to be able to recognize a group of reference signals for beam measurement purpose that becomes a comparison target for (per beam) reference signal received power (e.g., RSRP).

For example, when transmitting a reference signal for beam measurement purpose, a transmitting UE may provide, to a receiving UE, information for a scheduled total number of transmissions and a number of a reference signal for beam measurement purpose currently being transmitted. Here, upon receiving a reference signal for beam measurement purpose, a receiving UE may recognize which ordinal reference signals for beam measurement purpose have been successfully received, based on a scheduled total number of transmissions of a reference signal for beam measurement purpose and a number of a currently transmitted reference signal for beam measurement purpose.

Here, a receiving UE may feedback, to a transmitting UE, information for reference signals for beam measurement purpose that the receiving UE has missed, in order to assist a beam measurement procedure of the transmitting UE. For example, a receiving UE may deliver, to a transmitting UE, information for a reference signal for beam measurement purpose that has been received and a reference signal for beam measurement purpose that has not been received, in a bitmap form. For example, a transmitting UE may retransmit only reference signals for beam measurement purpose that a receiving UE has missed.

The method of Proposal #10 may be applied in combination with other proposed scheme(s) to the extent that it does not conflict with the operations disclosed herein.

Proposal #11

According to an embodiment of the present disclosure, a UE may (re)start a beam measurement timer upon receiving a reference signal for beam measurement purpose, and may perform a beam measurement result reporting after the beam measurement timer has expired.

Here, for example, the reference signal for beam measurement purpose may be an aperiodic reference signal.

Here, a UE (re)starting a beam measurement timer may mean setting a timer to a specific value. Here, the timer setting value may be determined based on a (pre)configuration and/or a PC5-RRC configuration and/or an inter-UE control information (e.g., SCI) and/or a control element (e.g., MAC CE).

Here, for example, the beam measurement timer may be decremented as time elapses. For example, the beam measurement timer may be decremented as each slot elapses. Here, the slot may be a physical slot and/or a logical slot.

According to an embodiment of the present disclosure, assuming that an inter-UE communication (e.g., an SL communication) is performed between UEs, a UE may transmit a reference signal for beam measurement purpose in order to support a multi-beam-based inter-UE transmission (e.g., an SL transmission). Here, for example, when a reference signal for beam measurement purpose is an aperiodic reference signal, there may be a need to provide a reference point indicating when a receiving UE should stop a beam measurement and perform a beam reporting.

For example, a UE may (re)start a beam measurement timer upon receiving a reference signal for beam measurement purpose, and may perform a beam measurement result reporting after the beam measurement timer has expired. Here, (re)starting the beam measurement timer may mean setting a timer to a specific value. Here, for example, the timer setting value may be (pre)configured and/or PC5-RRC-configured.

Here, the beam measurement timer may be decremented as time elapses. For example, the beam measurement timer may be decremented as each slot elapses. Here, for example, the slot may be a physical slot and/or a logical slot.

According to a proposed method of the present disclosure, a receiving UE may automatically report a beam measurement result even when a transmitting UE does not separately instruct the receiving UE to stop a beam measurement.

The method of Proposal #11 may be applied in combination with other proposed scheme(s) to the extent that it does not conflict with the operations disclosed herein.

Proposal #12

According to an embodiment of the present disclosure, when a UE does not detect a reference signal for beam measurement purpose and/or an inter-UE physical channel (e.g., PSCCH/PSSCH) related to a reference signal for beam measurement purpose during N beam measurement periods, a beam failure instance (e.g., a beam failure instance (BFI)) may be triggered.

Here, for example, the N and/or a beam measurement period may be determined based on a (pre)configuration and/or a PC5-RRC configuration and/or an inter-UE control information (e.g., SCI) and/or a control element (e.g., MAC CE).

According to an embodiment of the present disclosure, assuming that an inter-UE communication (e.g., an SL communication) is performed between UEs, a UE may transmit a reference signal for beam measurement purpose in order to support a multi-beam-based inter-UE transmission (e.g., an SL transmission). Here, for example, a receiving UE may trigger whether a beam failure instance occurs based on a reception sensitivity (e.g., a SINR) of a reference signal for beam measurement purpose.

Here, when a reference signal for beam measurement purpose is aperiodic and a connection from a transmitting UE is disconnected, there may be a need to provide a rule for determining a beam failure instance without reception of a reference signal for beam measurement purpose.

For example, when a UE does not detect a reference signal for beam measurement purpose and/or an inter-UE physical channel (e.g., PSCCH/PSSCH) related to a reference signal for beam measurement purpose during N beam measurement periods, the UE may determine that a beam pairing with a transmitting UE is disconnected and may trigger a beam failure instance. Here, the N and/or a beam measurement period may be determined based on a (pre)configuration and/or a PC5-RRC configuration and/or an inter-UE control information (e.g., SCI) and/or a control element (e.g., MAC CE).

According to a proposed method of the present disclosure, a receiving UE may trigger a beam failure instance by itself without relying on a reference signal for beam measurement purpose, even when a connection with a transmitting UE is disconnected. Here, when a beam failure instance occurs equal to or greater than a predetermined number of times, a beam failure detection (e.g., a beam failure detection (BFD)) may be determined.

The method of Proposal #12 may be applied in combination with other proposed scheme(s) to the extent that it does not conflict with the operations disclosed herein.

In various embodiments of the present disclosure, a spatial setting information for an inter-UE transmission (e.g., an SL transmission) may be differently or independently changed per a cast type and/or per a unicast session and/or per a receiver for an inter-UE transmission (e.g., an SL transmission) and/or per an SL channel type and/or per a (transmission and/or reception) resource pool and/or per a UE mobility-related information (for example, a speed, a velocity, a direction, an acceleration, a position, a height, etc.) and/or per a transmission priority value and/or per a reception priority value and/or per an inter-UE transmission (e.g., an SL transmission) for which an inter-UE feedback (e.g., an SL HARQ-ACK feedback) is enabled or disabled and/or per an inter-UE feedback (e.g., an SL HARQ-ACK feedback) option and/or per a QoS parameter and/or per a (remaining) packet delay budget (e.g., a PDB) and/or per a HARQ process and/or per a beam process and/or per a source ID and/or per a destination ID and/or per a TB.

In various embodiments of the present disclosure, a spatial setting information for an inter-UE transmission (e.g., an SL transmission) may be differently or independently managed per a cast type and/or per a unicast session and/or per a receiver for an inter-UE transmission (e.g., an SL transmission) and/or per an SL channel type and/or per a (transmission and/or reception) resource pool and/or per a UE mobility-related information (for example, a speed, a velocity, a direction, an acceleration, a position, a height, etc.) and/or per a transmission priority value and/or per a reception priority value and/or per an inter-UE transmission (e.g., an SL transmission) for which an inter-UE feedback (e.g., an SL HARQ-ACK feedback) is enabled or disabled and/or per an inter-UE feedback (e.g., an SL HARQ-ACK feedback) option and/or per a QoS parameter and/or per a (remaining) packet delay budget (e.g., a PDB) and/or per a HARQ process and/or per a beam process and/or per a source ID and/or per a destination ID and/or per a TB.

In various embodiments of the present disclosure, a spatial setting information for an inter-UE transmission (e.g., an SL transmission) may be differently or independently configured per a cast type and/or per a unicast session and/or per a receiver for an inter-UE transmission (e.g., an SL transmission) and/or per an SL channel type and/or per a (transmission and/or reception) resource pool and/or per a UE mobility-related information (for example, a speed, a velocity, a direction, an acceleration, a position, a height, etc.) and/or per a transmission priority value and/or per a reception priority value and/or per an inter-UE transmission (e.g., an SL transmission) for which an inter-UE feedback (e.g., an SL HARQ-ACK feedback) is enabled or disabled and/or per an inter-UE feedback (e.g., an SL HARQ-ACK feedback) option and/or per a QoS parameter and/or per a (remaining) packet delay budget (e.g., a PDB) and/or per a HARQ process and/or per a beam process and/or per a source ID and/or per a destination ID and/or per a TB.

In various embodiments of the present disclosure, a spatial setting information for an inter-UE transmission (e.g., an SL transmission) may be differently or independently indicated per a cast type and/or per a unicast session and/or per a receiver for an inter-UE transmission (e.g., an SL transmission) and/or per an SL channel type and/or per a (transmission and/or reception) resource pool and/or per a UE mobility-related information (for example, a speed, a velocity, a direction, an acceleration, a position, a height, etc.) and/or per a transmission priority value and/or per a reception priority value and/or per an inter-UE transmission (e.g., an SL transmission) for which an inter-UE feedback (e.g., an SL HARQ-ACK feedback) is enabled or disabled and/or per an inter-UE feedback (e.g., an SL HARQ-ACK feedback) option and/or per a QoS parameter and/or per a (remaining) packet delay budget (e.g., a PDB) and/or per a HARQ process and/or per a beam process and/or per a source ID and/or per a destination ID and/or per a TB.

Various schemes of the present disclosure may be differently applied per a unicast session (group) and/or per a cast type and/or per a transmission priority value and/or per a reception priority value and/or per an inter-UE transmission (e.g., an SL transmission) for which an inter-UE feedback (e.g., an SL HARQ-ACK feedback) is enabled or disabled and/or per an inter-UE feedback (e.g., an SL HARQ-ACK feedback) option and/or per a QoS parameter and/or per a (remaining) packet delay budget (e.g., a PDB) and/or per a congestion control level and/or per a (transmission and/or reception) resource pool and/or per a UE mobility-related information (for example, a speed, a velocity, a direction, an acceleration, a position, a height, etc.) and/or per an inter-UE transmission (e.g., an SL transmission) or a reception and/or per a HARQ process and/or per a beam process and/or per a source ID and/or per a destination ID and/or per a TB.

For example, in an embodiment of the present disclosure, a unit of a (pre)configuration may be configured in a form of the different combination. For example, in an embodiment of the present disclosure, a parameter indication and a management via an inter-UE physical control channel (e.g., a PSCCH) and/or an inter-UE physical shared channel (e.g., a PSSCH) may be performed in unit of the different combination.

In various embodiments of the present disclosure, a spatial setting and/or a TCI information and/or a QCL information may be interpreted as referring to each other and/or may be replaced with and interpreted as a beam-related information, a beam direction, a spatial domain transmission, or a reception filter.

In various embodiments of the present disclosure, that a spatial setting information for a transmission is the same may mean that a spatial domain transmission filter of a UE is the same for two different transmission signals. In an embodiment of the present disclosure, that a spatial setting information for a reception is the same may mean that two different reception signals have a QCL 'TypeD' relationship and/or a relationship using a same spatial reception parameter.

In various embodiments of the present disclosure, a (pre)configuration may mean a pre-configuration (based on a signaling from a server or at a product shipment time), a configuration from a base station, and a configuration via a PC5-RRC between UEs.

Various schemes of the present disclosure may be differently applied per an inter-UE channel (e.g., an SL channel). Various schemes of the present disclosure may be differently applied according to a type of an information included in an inter-UE channel (e.g., an SL channel).

The proposed method may be applied to an apparatus described below. First, a processor 202 of a receiving UE may configure at least one partial bandwidth (e.g., a BWP). Then, the processor 202 of the receiving UE may control a transceiver 206 of the receiving UE to receive, from a transmitting UE, a physical channel related to an inter-UE communication (e.g., an SL communication) and/or a reference signal related to an inter-UE communication (e.g., an SL communication) on at least one partial bandwidth (e.g., a BWP).

For example, during an inter-UE communication (e.g., an SL communication) in FR2, a UE may perform a transmission and/or a reception operation based on a multi-panel and/or a beam direction. Here, there may be a need to define a spatial setting including the beam-related information or a spatial domain transmission/reception filter. Here, a beam reference signal for measuring a beam quality may need to be transmitted and received between the UEs based on the spatial setting, and there may be a need to define a method by which the UEs recognize a transmission resource location for transmitting the beam reference signal.

According to an embodiment of the present disclosure, a UE may transmit a reference signal for beam measurement purpose transmitted along with a related inter-UE physical channel (e.g., a PSCCH/PSSCH). Here, based on a transmission resource of the inter-UE physical channel (e.g., a PSCCH/PSSCH), a time resource, a frequency resource, a code resource, and/or a beam resource of a reference signal for beam measurement purpose may be implicitly indicated.

For example, according to various embodiments of the present disclosure, information for a resource for receiving a beam reference signal that may be used for a beam-based transmission and reception operation in FR2 may be delivered without a separate signaling, thereby resulting in an effect of reducing a signaling overhead.

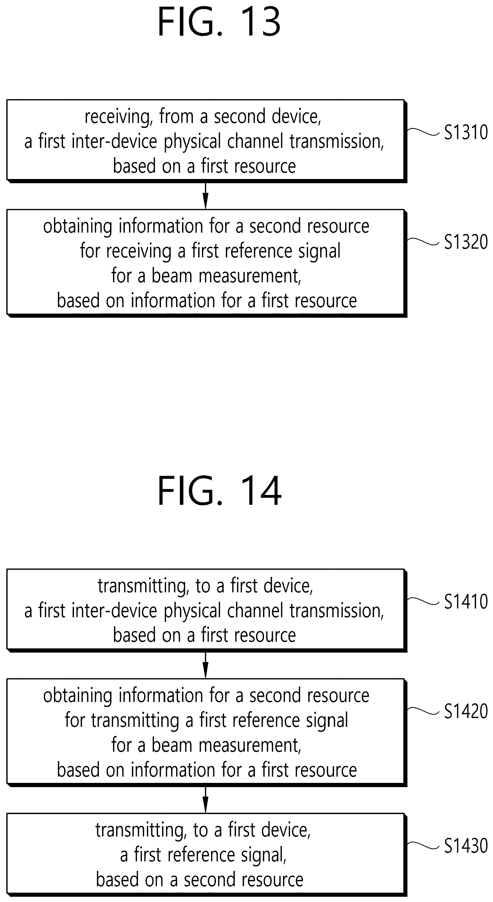

FIG. 13 shows a procedure in which a first device performs a wireless communication, according to an embodiment of the present disclosure. An embodiment of FIG. 13 may be combined with various embodiments of the present disclosure.

Referring to FIG. 13, in step S1310, a first device may receive, from a second device, a first inter-device physical channel transmission, based on a first resource. In step S1320, the first device may obtain information for a second resource for receiving a first reference signal for a beam measurement, based on information for the first resource.

For example, additionally, the first device may receive, from the second device, the first reference signal, based on the second resource.

For example, the first reference signal may be received based on reception strength related to the first inter-device physical channel transmission being greater than or equal to a threshold value.

For example, information related to an entire transmission number of reference signals may be received along with the first reference signal.

For example, additionally, the first device may start a measurement timer, based on a reception of the first reference signal; and perform a measurement report operation for at least one reference signal including the first reference signal based on expiry of the measurement timer.

For example, the operation of obtaining the information for the second resource may include: obtaining information for physical resource block set of resources for a beam measurement; and obtaining information for the second resource mapped to the first resource in the physical resource block set based on a resource index related to the first resource.

For example, indexing of the resource index may be performed in order of time division duplex indexing, frequency division duplex indexing, and code division duplex indexing.

For example, the physical resource block set may consist of S * N physical resource block sets or physical resource block interlaces, the S may be a number of subchannels in a slot, and the N may be a number of slots in a transmission interval in which an inter-device physical channel transmission is performed.

For example, the second resource may be determined based on a beam ID related to a first beam used in the reception of the first inter-device physical channel transmission.

For example, the second resource may be determined based on an index related to the first reference signal.

For example, additionally, the first device may receive, from the second device, group identifier information for the first reference signal.

For example, the reception of the first inter-device physical channel transmission may be performed based on a first beam, and the first beam being used in a transmission on the first resource may be agreed between the first device and the second device.

For example, the first resource may be selected based on sensing, and the sensing may be performed for potential transmission resources on which the first beam being used is agreed between the first device and the second device.

The above-described embodiment may be applied to various apparatuses described below. First, a processor 102 of a first device 100 may control a transceiver 106 to receive, from a second device 200, a first inter-device physical channel transmission, based on a first resource. And, the processor 102 of the first device 100 may obtain information for a second resource for receiving a first reference signal for a beam measurement, based on information for the first resource.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: receiving, from a second device, a first inter-device physical channel transmission, based on a first resource; and obtaining information for a second resource for receiving a first reference signal for a beam measurement, based on information for the first resource.

For example, additionally, the instructions may cause the first device to: receive, from the second device, the first reference signal, based on the second resource.

For example, the first reference signal may be received based on reception strength related to the first inter-device physical channel transmission being greater than or equal to a threshold value.

For example, information related to an entire transmission number of reference signals may be received along with the first reference signal.

For example, additionally, the instructions may cause the first device to: start a measurement timer, based on a reception of the first reference signal; and perform a measurement report operation for at least one reference signal including the first reference signal based on expiry of the measurement timer.

For example, the operation of obtaining the information for the second resource may include: obtaining information for physical resource block set of resources for a beam measurement; and obtaining information for the second resource mapped to the first resource in the physical resource block set based on a resource index related to the first resource.

For example, indexing of the resource index may be performed in order of time division duplex indexing, frequency division duplex indexing, and code division duplex indexing.

For example, the physical resource block set may consist of S * N physical resource block sets or physical resource block interlaces, the S may be a number of subchannels in a slot, and the N may be a number of slots in a transmission interval in which an inter-device physical channel transmission is performed.

For example, the second resource may be determined based on a beam ID related to a first beam used in the reception of the first inter-device physical channel transmission.

For example, the second resource may be determined based on an index related to the first reference signal.

For example, additionally, the instructions may cause the first device to: receive, from the second device, group identifier information for the first reference signal.

For example, the reception of the first inter-device physical channel transmission may be performed based on a first beam, and the first beam being used in a transmission on the first resource may be agreed between the first device and the second device.

For example, the first resource may be selected based on sensing, and the sensing may be performed for potential transmission resources on which the first beam being used is agreed between the first device and the second device.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: receiving, from a second UE, a first inter-UE physical channel transmission, based on a first resource; and obtaining information for a second resource for receiving a first reference signal for a beam measurement, based on information for the first resource.

According to an embodiment of the present disclosure, a non-transitory computer-readable storage medium storing instructions may be proposed. For example, the instructions, based on being executed, may cause a first device to: receive, from a second device, a first inter-device physical channel transmission, based on a first resource; and obtain information for a second resource for receiving a first reference signal for a beam measurement, based on information for the first resource.

FIG. 14 shows a procedure in which a second device performs a wireless communication, according to an embodiment of the present disclosure. An embodiment of FIG. 14 may be combined with various embodiments of the present disclosure.

Referring to FIG. 14, in step S1410, a second device may transmit, to a first device, a first inter-device physical channel transmission, based on a first resource. In step S1420, the second device may obtain information for a second resource for transmitting a first reference signal for a beam measurement, based on information for the first resource. In step S1430, the second device may transmit, to the first device, the first reference signal, based on the second resource.

For example, the operation of obtaining the information for the second resource may include: obtaining information for a physical resource block set of resources for beam measurement purpose; and obtaining information for the second resource that is mapped to the first resource in the physical resource block set based on a resource index related to the first resource.

The above-described embodiment may be applied to various apparatuses described below. First, a processor 202 of a second device 200 may control a transceiver 206 to transmit, to a first device 100, a first inter-device physical channel transmission, based on a first resource. And, the processor 202 of the second device 200 may obtain information for a second resource for transmitting a first reference signal for a beam measurement, based on information for the first resource. And, the processor 202 of the second device 200 may control the transceiver 206 to transmit, to the first device 100, the first reference signal, based on the second resource.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: transmitting, to a first device, a first inter-device physical channel transmission, based on a first resource; obtaining information for a second resource for transmitting a first reference signal for a beam measurement, based on information for the first resource; and transmitting, to the first device, the first reference signal, based on the second resource.

For example, the operation of obtaining the information for the second resource may include: obtaining information for a physical resource block set of resources for beam measurement purpose; and obtaining information for the second resource that is mapped to the first resource in the physical resource block set based on a resource index related to the first resource.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

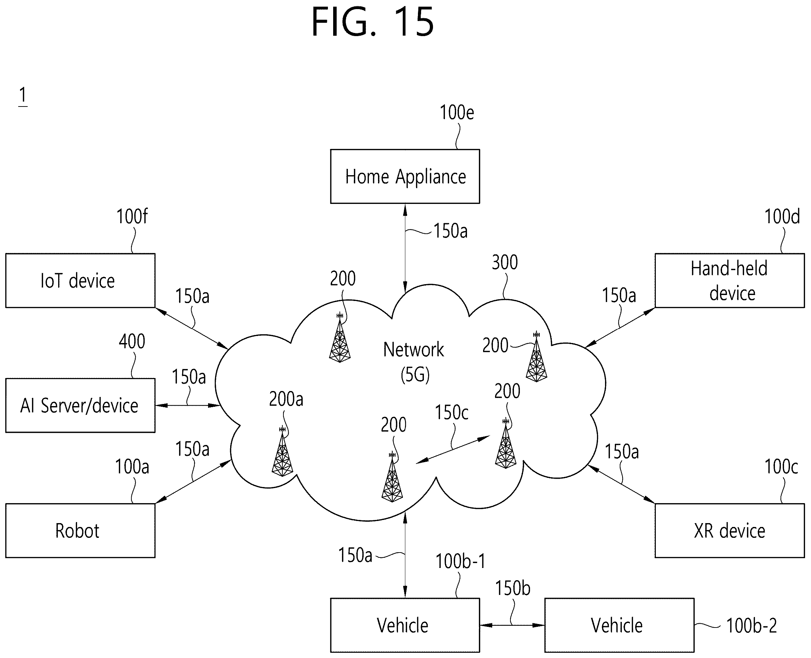

FIG. 15 shows a communication system 1, based on an embodiment of the present disclosure. The embodiment of FIG. 15 may be combined with various embodiments of the present disclosure.

Referring to FIG. 15, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

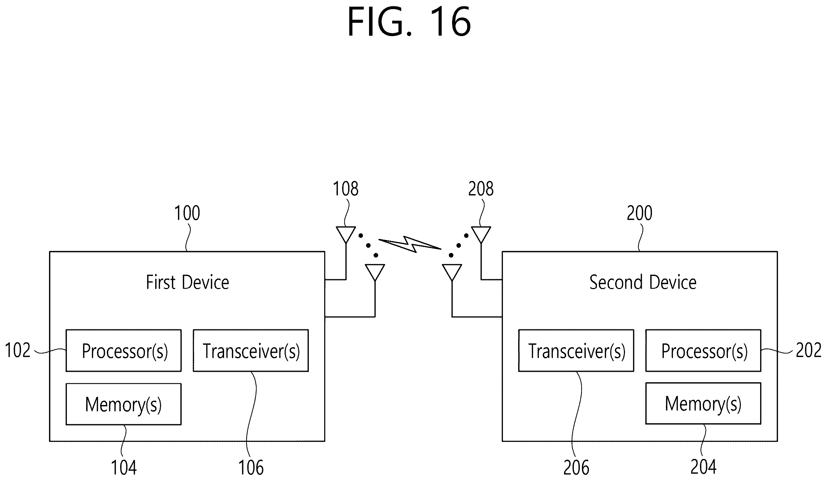

FIG. 16 shows wireless devices, based on an embodiment of the present disclosure. The embodiment of FIG. 16 may be combined with various embodiments of the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

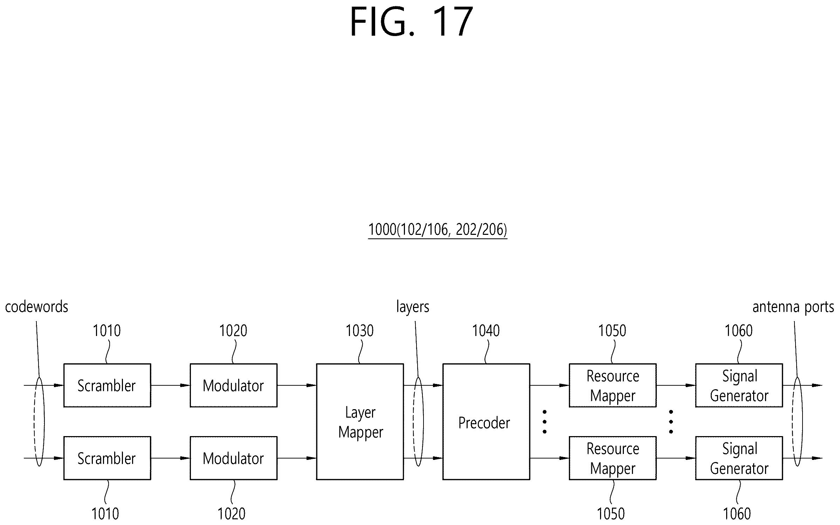

FIG. 17 shows a signal process circuit for a transmission signal, based on an embodiment of the present disclosure. The embodiment of FIG. 17 may be combined with various embodiments of the present disclosure.

Referring to FIG. 17, a signal processing circuit 1000 may include scramblers 1010, modulators 1020, a layer mapper 1030, a precoder 1040, resource mappers 1050, and signal generators 1060. An operation/function of FIG. 17 may be performed, without being limited to, the processors 102 and 202 and/or the transceivers 106 and 206 of FIG. 16. Hardware elements of FIG. 17 may be implemented by the processors 102 and 202 and/or the transceivers 106 and 206 of FIG. 16. For example, blocks 1010 to 1060 may be implemented by the processors 102 and 202 of FIG. 16. Alternatively, the blocks 1010 to 1050 may be implemented by the processors 102 and 202 of FIG. 16 and the block 1060 may be implemented by the transceivers 106 and 206 of FIG. 16.

Codewords may be converted into radio signals via the signal processing circuit 1000 of FIG. 17. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 17. For example, the wireless devices (e.g., 100 and 200 of FIG. 16) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

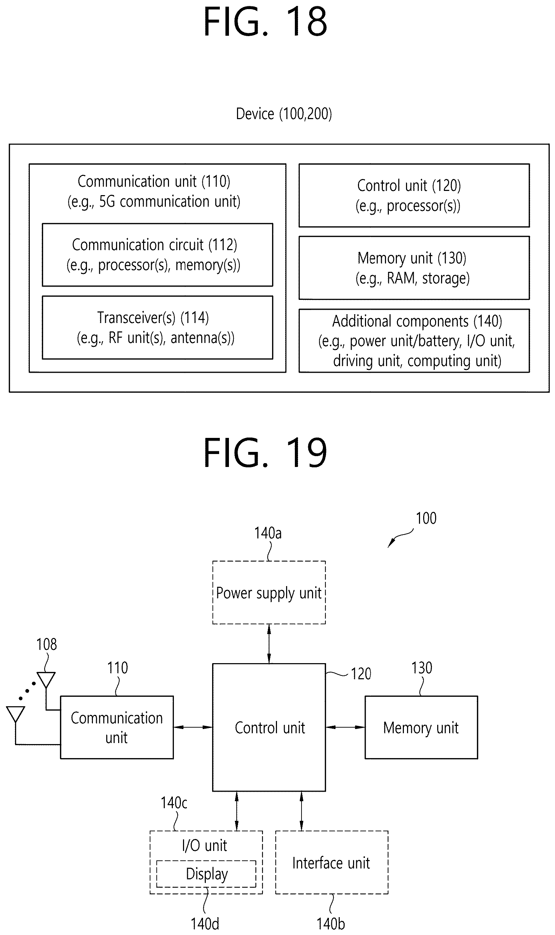

FIG. 18 shows another example of a wireless device, based on an embodiment of the present disclosure. The wireless device may be implemented in various forms according to a use-case/service (refer to FIG. 15). The embodiment of FIG. 18 may be combined with various embodiments of the present disclosure.

Referring to FIG. 18, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 18 will be described in detail with reference to the drawings.

FIG. 19 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless terminal (WT). The embodiment of FIG. 19 may be combined with various embodiments of the present disclosure.

Referring to FIG. 19, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 18, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

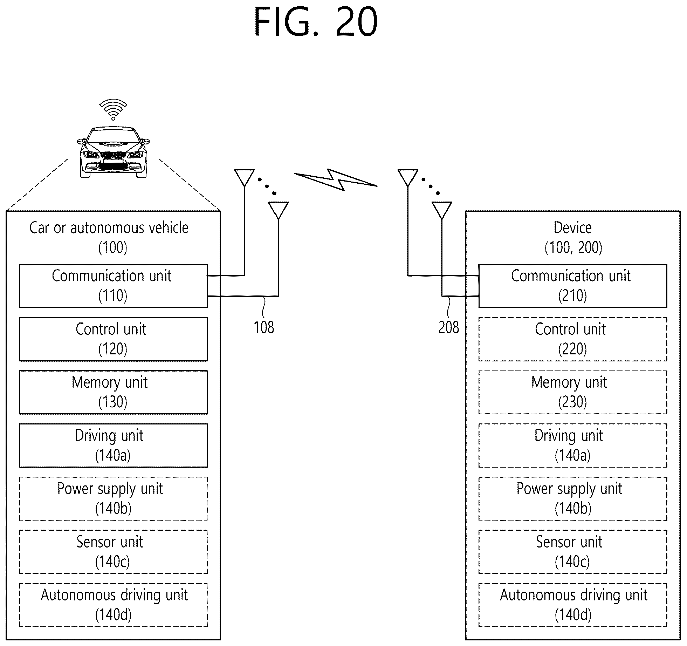

FIG. 20 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 20 may be combined with various embodiments of the present disclosure.

Referring to FIG. 20, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a conflict sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1. A method for performing, by a first device, wireless communication, the method comprising:

   receiving, from a second device, a first inter-device physical channel transmission, based on a first resource; and
   obtaining information for a second resource for receiving a first reference signal for a beam measurement, based on information for the first resource.

2. The method of claim 1, further comprising:
   receiving, from the second device, the first reference signal, based on the second resource.

3. The method of claim 2, wherein the first reference signal is received based on reception strength related to the first inter-device physical channel transmission being greater than or equal to a threshold value.

4. The method of claim 2, wherein information related to an entire transmission number of reference signals is received along with the first reference signal.

5. The method of claim 2, further comprising:

   starting a measurement timer, based on a reception of the first reference signal; and
   performing a measurement report operation for at least one reference signal including the first reference signal based on expiry of the measurement timer.

6. The method of claim 1, wherein the operation of obtaining the information for the second resource includes:

obtaining information for physical resource block set of resources for a beam measurement; and
obtaining information for the second resource mapped to the first resource in the physical resource block set based on a resource index related to the first resource.

7. The method of claim 6, wherein indexing of the resource index is performed in order of time division duplex indexing, frequency division duplex indexing, and code division duplex indexing.

8. The method of claim 6, wherein the physical resource block set consists of S * N physical resource block sets or physical resource block interlaces,

wherein the S is a number of subchannels in a slot, and
wherein the N is a number of slots in a transmission interval in which an inter-device physical channel transmission is performed.

9. The method of claim 1, wherein the second resource is determined based on a beam ID related to a first beam used in the reception of the first inter-device physical channel transmission.

10. The method of claim 1, wherein the second resource is determined based on an index related to the first reference signal.

11. The method of claim 1, further comprising:
receiving, from the second device, group identifier information for the first reference signal.

12. The method of claim 1, wherein the reception of the first inter-device physical channel transmission is performed based on a first beam, and
wherein the first beam being used in a transmission on the first resource is agreed between the first device and the second device.

13. The method of claim 1, wherein the first resource is selected based on sensing, and
wherein the sensing is performed for potential transmission resources on which the first beam being used is agreed between the first device and the second device.

14. A first device for performing wireless communication, the first device comprising:

at least one transceiver;
at least one processor; and
at least one memory operably connected to the at least one processor and storing instructions that, based on being executed by the at least one processor, cause the first device to perform operations,
wherein the operations comprise:

receiving, from a second device, a first inter-device physical channel transmission, based on a first resource; and
obtaining information for a second resource for receiving a first reference signal for a beam measurement, based on information for the first resource.

15. A device adapted to control a first user equipment, UE, the device comprising:

at least one processor; and
at least one memory operably connected to the at least one processor and storing instructions that, based on being executed by the at least one processor, cause the first UE to perform operations,
wherein the operations comprise:

receiving, from a second UE, a first inter-UE physical channel transmission, based on a first resource; and
obtaining information for a second resource for receiving a first reference signal for a beam measurement, based on information for the first resource.

16. A non-transitory computer-readable storage medium storing instructions that, based on being executed, cause a first device to:

receive, from a second device, a first inter-device physical channel transmission, based on a first resource; and obtain information for a second resource for receiving a first reference signal for a beam measurement, based on information for the first resource.

17. A method for performing, by a second device, wireless communication, the method comprising:

transmitting, to a first device, a first inter-device physical channel transmission, based on a first resource; obtaining information for a second resource for transmitting a first reference signal for a beam measurement, based on information for the first resource; and transmitting, to the first device, the first reference signal, based on the second resource.

18. The method of claim 17, wherein the operation of obtaining the information for the second resource includes:

obtaining information for a physical resource block set of resources for beam measurement purpose; and obtaining information for the second resource that is mapped to the first resource in the physical resource block set based on a resource index related to the first resource.

19. A second device for performing wireless communication, the second device comprising:

at least one transceiver; at least one processor; and at least one memory operably connected to the at least one processor and storing instructions that, based on being executed by the at least one processor, cause the second device to perform operations, wherein the operations comprise:

transmitting, to a first device, a first inter-device physical channel transmission, based on a first resource; obtaining information for a second resource for transmitting a first reference signal for a beam measurement, based on information for the first resource; and transmitting, to the first device, the first reference signal, based on the second resource.

20. The second device of claim 19, wherein the operation of obtaining the information for the second resource includes:

obtaining information for a physical resource block set of resources for beam measurement purpose; and obtaining information for the second resource that is mapped to the first resource in the physical resource block set based on a resource index related to the first resource.

# FIG. 1

# FIG. 2

FIG. 3

Data network

Gateway

Feeder link

Satellite
(or UAS platform)

Service link

Beam foot print

User Equipments

Field of view of the satellite
(or UAS platform)

# FIG. 4

Satellite
(or UAS platform)

Satellite
(or UAS platform)

ISL

Feeder link

Service
link

Feeder link
(mandatory if on ISL)

Data network

Gateway

User
Equipments

Beam foot
print

Field of view of the satellite
(or UAS platform)

EP 4 723 721 A1

# FIG. 5

(a)

(b)

# FIG. 6

Resource grid

A carrier
(up to 3300 subcarriers,
i.e., 275 RBs)

A BWP

1RB=12 subcarriers

1 RE

1subcarrier

1 symbol

l=0 • • •

k=0

# FIG. 7

PRB N3

$N_{BWP, 2}^{size}$

PRB 1
PRB 0

PRB N2

$N_{BWP, 1}^{size}$

PRB 1
PRB 0

PRB N1

$N_{BWP, 0}^{size}$

PRB 1
PRB 0

CRB 0

Carrier Bandwidth

$N_{BWP, 2}^{start}$

$N_{BWP, 1}^{start}$

$N_{BWP, 0}^{start}$

Freq.

Time

PRB 0 (Point A) in reference resource block

# FIG. 8

BS | first UE | second UE | first UE | second UE

resource scheduling S800

PSCCH S810
PSSCH S820
PSFCH S830
PUCCH/PUSCH S840

PSCCH S810
PSSCH S820
PSFCH S830

(a)

(b)

# FIG. 9

EP 4 723 721 A1

# FIG. 10

sensing

beam measurement
resource transmission

transmission
indication

time

potential transmission
resource set

potential transmission
resource set

additional beam measurement
resource transmission

EP 4 723 721 A1

# FIG. 11

beam measurement resource

transmission beam(s)

transmitting UE

| PSCCH | RS | RS | RS | RS |

| 0 | 1 | 2 | 3 | 4 | transmission beam

time

EP 4 723 721 A1

# FIG. 12

beam measurement resource

time

reception beam(s)

receiving UE

RS RS RS RS

| 0 | 0 | 0 | 0 | transmission beam
| 0 | 1 | 2 | 3 | reception beam

# FIG. 13

receiving, from a second device,
a first inter-device physical channel transmission,
based on a first resource — S1310

obtaining information for a second resource
for receiving a first reference signal
for a beam measurement,
based on information for a first resource — S1320

# FIG. 14

transmitting, to a first device,
a first inter-device physical channel transmission,
based on a first resource — S1410

obtaining information for a second resource
for transmitting a first reference signal
for a beam measurement,
based on information for a first resource — S1420

transmitting, to a first device,
a first reference signal,
based on a second resource — S1430

# FIG. 15

FIG. 16

# FIG. 17

1000(102/106, 202/206)

# FIG. 18

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 19

140a

Power supply unit

108

110

Communication
unit

120

Control unit

130

Memory unit

140c

I/O unit

Display

Interface unit

140d

140b

100

# FIG. 20

Car or autonomous vehicle
(100)

| Communication unit (110) |
| Control unit (120) |
| Memory unit (130) |
| Driving unit (140a) |
| Power supply unit (140b) |
| Sensor unit (140c) |
| Autonomous driving unit (140d) |

108

208

Device
(100, 200)

| Communication unit (210) |
| Control unit (220) |
| Memory unit (230) |
| Driving unit (140a) |
| Power supply unit (140b) |
| Sensor unit (140c) |
| Autonomous driving unit (140d) |

## INTERNATIONAL SEARCH REPORT

| | International application No. |
|---|---|
| | **PCT/KR2024/009856** |

| A. | CLASSIFICATION OF SUBJECT MATTER |
|---|---|
| | **H04W 24/08**(2009.01)i; **H04W 72/044**(2023.01)i; **H04W 72/25**(2023.01)i; **H04W 72/02**(2009.01)i; **H04B 17/318**(2015.01)i; **H04B 7/06**(2006.01)i; **H04L 5/00**(2006.01)i; **H04W 92/18**(2009.01)i |

According to International Patent Classification (IPC) or to both national classification and IPC

| B. | FIELDS SEARCHED |
|---|---|

Minimum documentation searched (classification system followed by classification symbols)

H04W 24/08(2009.01); H04B 7/06(2006.01); H04L 1/18(2006.01); H04L 5/00(2006.01); H04L 5/14(2006.01); H04W 72/04(2009.01); H04W 72/25(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: inter-device communication, resource, physical channel transmit, beam, measurement, reference signal, strength, threshold, timer, index, mapping, identifier

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2023-0098793 A (LG ELECTRONICS INC.) 04 July 2023 (2023-07-04) See paragraphs [0008]-[0158]; claim 1; and figures 1-22. | 1-20 |
| Y | US 2020-0343951 A1 (HOU, Yanzhao et al.) 29 October 2020 (2020-10-29) See paragraph [0082]; and figure 19. | 1-20 |
| Y | KR 10-2023-0090258 A (SAMSUNG ELECTRONICS CO., LTD.) 21 June 2023 (2023-06-21) See paragraphs [0036]-[0101]; and figures 1-7. | 3,5-11,13,18,20 |
| A | US 2022-0046631 A1 (QUALCOMM INCORPORATED) 10 February 2022 (2022-02-10) See paragraphs [0032]-[0151]; and figures 1-11. | 1-20 |
| A | WO 2022-120674 A1 (QUALCOMM INCORPORATED et al.) 16 June 2022 (2022-06-16) See paragraphs [0033]-[0144]; and figures 1-11. | 1-20 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 October 2024** | **15 October 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/009856**

| Patent document cited in search report | | | Publication date (day/month/year) | Patent family member(s) | | | Publication date (day/month/year) |
|---|---|---|---|---|---|---|---|
| KR | 10-2023-0098793 | A | 04 July 2023 | US | 2023-0396975 | A1 | 07 December 2023 |
| | | | | WO | 2022-098013 | A1 | 12 May 2022 |
| US | 2020-0343951 | A1 | 29 October 2020 | CN | 110289896 | A | 27 September 2019 |
| | | | | CN | 111279626 | A | 12 June 2020 |
| | | | | EP | 3726740 | A1 | 21 October 2020 |
| | | | | EP | 3726740 | A4 | 13 January 2021 |
| | | | | US | 11456789 | B2 | 27 September 2022 |
| | | | | US | 2022-0173781 | A1 | 02 June 2022 |
| | | | | US | 2023-0141536 | A1 | 11 May 2023 |
| | | | | US | 2023-0387983 | A1 | 30 November 2023 |
| | | | | WO | 2019-174532 | A1 | 19 September 2019 |
| KR | 10-2023-0090258 | A | 21 June 2023 | CN | 116366117 | A | 30 June 2023 |
| | | | | DE | 102022132501 | A1 | 15 June 2023 |
| | | | | TW | 202341688 | A | 16 October 2023 |
| | | | | US | 2023-0209365 | A1 | 29 June 2023 |
| US | 2022-0046631 | A1 | 10 February 2022 | CN | 116366117 | A | 30 June 2023 |
| | | | | DE | 102022132501 | A1 | 15 June 2023 |
| | | | | TW | 202341688 | A | 16 October 2023 |
| | | | | US | 2023-0209365 | A1 | 29 June 2023 |
| WO | 2022-120674 | A1 | 16 June 2022 | CN | 116569491 | A | 08 August 2023 |
| | | | | EP | 4260475 | A1 | 18 October 2023 |
| | | | | KR | 10-2023-0115983 | A | 03 August 2023 |
| | | | | US | 2023-0396305 | A1 | 07 December 2023 |

Form PCT/ISA/210 (patent family annex) (July 2022)